(19) Europäisches Patentamt
European Patent Office
Office européen des brevets

(11) EP 4 083 738 A1

(12) EUROPEAN PATENT APPLICATION
published in accordance with Art. 153(4) EPC

(43) Date of publication:
02.11.2022  Bulletin 2022/44

(51) International Patent Classification (IPC):
G05D 1/02 (2020.01)

(21) Application number: 20910162.5

(52) Cooperative Patent Classification (CPC):
G05D 1/02; G06K 9/00

(22) Date of filing: 27.11.2020

(86) International application number:
PCT/CN2020/132291

(87) International publication number:
WO 2021/135766 (08.07.2021 Gazette 2021/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.12.2019  CN 201911417562

(71) Applicant: Huawei Technologies Co., Ltd.
Shenzhen, Guangdong 518129 (CN)

(72) Inventors:
• HU, Weichen
Shenzhen, Guangdong 518129 (CN)
• XIAO, Cong
Shenzhen, Guangdong 518129 (CN)
• WANG, Can
Shenzhen, Guangdong 518129 (CN)

(74) Representative: Maiwald Patent- und
Rechtsanwaltsgesellschaft mbH
Elisenhof
Elisenstraße 3
80335 München (DE)

(54) **TRAJECTORY PLANNING METHOD AND APPARATUS, CONTROLLER AND SMART CAR**

(57) A trajectory planning method and apparatus, a controller (101), and a smart car are provided, to effectively detect an obstacle and further plan a driving trajectory of a smart car. The trajectory planning method includes: After obtaining obstacle data collected by a plurality of sensors, a controller (101) in a smart car performs deduplication processing on the obstacle data collected by the plurality of sensors, to obtain a detection result of a target obstacle, and finally plans a trajectory of the car based on the detection result of the target obstacle. This can comprehensively detect an obstacle around the smart car with reference to the obstacle data collected by the plurality of sensors, effectively remove repeated obstacles, appropriately plan the driving trajectory of the smart car, and improve automatic driving safety.

A controller obtains obstacle data collected by a plurality of sensors — 401

The controller performs deduplication processing on the obstacle data collected by the plurality of sensors, to obtain a detection result of a target obstacle — 402

The controller plans a trajectory of a car based on the detection result of the target obstacle — 403

FIG. 4

**Description**

**CROSS-REFERENCE TO RELATED APPLICATIONS**

This application claims priority to Chinese Patent Application No. 201911417562.5, filed with the China National Intellectual Property Administration on December 31, 2019 and entitled "TRAJECTORY PLANNING METHOD AND APPARATUS, CONTROLLER, AND SMART CAR", which is incorporated herein by reference in its entirety.

**TECHNICAL FIELD**

This application relates to the smart car (smart/intelligent car) field, and in particular, to a trajectory planning method and apparatus, a controller, and a smart car in an automatic driving (automatic driving, ADS) process.

**BACKGROUND**

Obstacle sensing in automatic driving means that a sensor detects information about an obstacle around an ego vehicle in an automatic driving process, and is a basis for implementing automatic driving of a car. Currently, an obstacle detection method mainly depends on a vehicle-mounted sensor. A laser radar and a high-definition map in each smart car are usually used together to determine information about an obstacle around the smart car, so as to plan a driving trajectory of the smart car. However, the laser radar is greatly affected by weather, and has limits in a usage scenario and precision. A camera is used as a detection device in another manner. Because the camera can collect only a two-dimensional image, a complex processing process is required to identify a type of an object in the image, but different individuals in a same type of object cannot be identified. As a result, the camera cannot meet obstacle detection requirements of the smart car in the automatic driving process in various complex scenarios, a driving trajectory of the smart car cannot be appropriately planned, and automatic driving safety is affected. Therefore, how to effectively detect an obstacle to plan a driving trajectory of a smart car becomes an urgent technical problem to be resolved.

**SUMMARY**

This application provides a trajectory planning method and apparatus, a controller, and a smart car, to effectively detect an obstacle and further plan a driving trajectory of a smart car.
According to a first aspect, this application provides a trajectory planning method. The method is implemented by a controller in a smart car. After obtaining obstacle data collected by a plurality of sensors, the controller performs deduplication processing on the obstacle data collected by the plurality of sensors, to obtain a detection result of a target obstacle, and finally plans a trajectory of the car based on the detection result of the target obstacle, where the plurality of sensors include at least two types of sensors.
The method can resolve a current problem that the driving trajectory of the smart car cannot be appropriately planned because obstacle detection requirements of the smart car cannot be met. This method can comprehensively detect an obstacle around the smart car with reference to the obstacle data collected by the plurality of sensors, effectively remove repeated obstacles, appropriately plan the driving trajectory of the smart car, and improve automatic driving safety.
In a possible design, a specific method in which the controller performs the deduplication processing on the obstacle data collected by the plurality of sensors, to obtain the detection result of the target obstacle may be as follows: The controller divides the plurality of sensors into a plurality of sensing groups based on sensing ranges of the plurality of sensors, and divides the plurality of sensing groups into a plurality of compute groups based on a maximum range including sensing ranges of the plurality of sensing groups. After performing first deduplication processing on obstacle data collected by sensors in each compute group, the controller performs second deduplication processing on first deduplication results corresponding to the plurality of compute groups to obtain a second deduplication result, where any compute group includes at least two sensing groups, and maximum ranges of the at least two sensing groups overlap, any sensing group includes at least two sensors, types of the at least two sensors are at least two types, sensing ranges of the sensors in the any sensing group overlap, and a total range of sensing ranges of the sensors in all the sensing groups covers a panoramic range of the smart car.
In the foregoing method, the controller can first divide the plurality of sensors into the sensing groups, then divide the sensing groups into the compute groups, then perform the deduplication processing on data in several compute groups simultaneously, and finally perform deduplication on data between compute groups. In this way, a plurality of deduplication processes can be performed simultaneously, thereby improving obstacle deduplication accuracy and efficiency.
In another possible design, a specific method in which the controller performs first deduplication processing on obstacle data collected by sensors in any compute group may be as follows: The controller performs the first deduplication processing on obstacle data collected by sensors in each sensing group in the any compute group. Then, the controller performs the second deduplication processing on first deduplication results corresponding to the at least two sensing groups in the any compute group, to obtain a second deduplication result corresponding to the compute group, where the second deduplication result includes the detection result of the target obstacle. In the foregoing method, deduplication can be performed on obstacle data in several sensing groups simultaneously, and then deduplication is performed on data between the sensing groups. The plurality of deduplication processes can be performed simultaneously, thereby improving deduplication efficiency. In addition, the deduplication first performed in groups and then between groups can improve deduplication precision.

In another possible design, a specific method in which the controller performs first deduplication processing on obstacle data collected by sensors in any sensing group may be as follows: The controller generates, based on obstacle data collected by each sensor in the any sensing group, an obstacle attribute list corresponding to the sensor, and then fuses obstacle attribute lists corresponding to all sensors in the sensing group, to obtain an obstacle attribute list corresponding to the any sensing group, where the obstacle attribute list corresponding to the sensor includes at least one obstacle attribute. In the foregoing method, attribute data of a same obstacle identified by all sensors in one sensing group can be combined, so that there are no repeated obstacles in an obstacle attribute list corresponding to the sensing group, thereby improving obstacle detection accuracy.

In another possible design, a specific method in which the controller generates, based on obstacle data collected by each sensor, an obstacle attribute list corresponding to the sensor may be as follows: When the sensor is a laser radar, the controller may first project point cloud data onto a two-dimensional RGB image based on preset virtual camera parameters, where obstacle data collected by the laser radar is the point cloud data; and then perform instance segmentation on a two-dimensional RGB image obtained after the projection, to obtain an obstacle attribute list corresponding to the laser radar; or when the sensor is a camera, the controller may directly perform instance segmentation on a two-dimensional RGB image, to obtain an obstacle attribute list corresponding to the camera, where obstacle data collected by the camera is the two-dimensional RGB image. In the foregoing method, obstacle attribute lists corresponding to different types of sensors can be separately obtained, thereby facilitating subsequent fusion of obstacle attribute data.

In another possible design, a specific method in which the controller performs instance segmentation on any two-dimensional RGB image to obtain an obstacle attribute list may be as follows: The controller enters the two-dimensional RGB image into a preset instance segmentation model, and generates the obstacle attribute list based on an instance segmentation result after obtaining the instance segmentation result. In the foregoing method, a two-dimensional RGB image corresponding to a sensor can be analyzed by using the instance segmentation model, to determine an obstacle attribute, thereby obtaining an obstacle attribute list corresponding to the sensor.

In another possible design, a specific method in which the controller fuses obstacle attribute lists corresponding to all sensors in the any sensing group may be as follows: The controller performs matching against an obstacle in a second obstacle attribute list, starting from a first obstacle that is not marked as "fused" in a first obstacle attribute list, until all obstacles in the first obstacle attribute list are marked as "fused"; and when there is a matched obstacle in the second obstacle attribute list, the controller combines attribute data of the obstacle in the first obstacle list and the second obstacle list, combines attribute data of an obstacle near the obstacle in the first obstacle list and the second obstacle list, and marks the obstacle and the obstacle near the obstacle as "fused"; or when there is no matched obstacle in the second obstacle attribute list, the controller marks the obstacle as "fused", where the first obstacle attribute list is an obstacle attribute list obtained after A obstacle attribute lists in obstacle attribute lists corresponding to N sensors in the any sensing group are fused, the second obstacle attribute list is an obstacle attribute list obtained after B obstacle attribute lists are fused, N is an integer greater than or equal to 2, A is an integer greater than or equal to 1, B is an integer greater than or equal to 1, and A+B=N. In the foregoing method, attribute data of a same obstacle identified by all the sensors in the sensing group can be combined, so that there are no repeated obstacles in the obstacle attribute list corresponding to the sensing group, thereby improving obstacle detection accuracy. In addition, repeated obstacles are determined based on a relationship between the obstacle and a nearby obstacle in a fusion process, and this can improve deduplication efficiency.

In another possible design, A sensors may be sensors of a same type or different types, and B sensors may be sensors of a same type or different types.

In another possible design, a specific method in which the controller performs the second deduplication processing on the first deduplication results corresponding to the at least two sensing groups in the any compute group, to obtain the second deduplication result corresponding to the compute group may be as follows: The controller determines, based on a position of an obstacle in a first deduplication result corresponding to each sensing group, a sensing range corresponding to the sensing group; determines an overlapping range between the at least two sensing groups based on the sensing range corresponding to each sensing group; and performs the second deduplication processing on the first deduplication results corresponding to the at least two sensing groups with the overlapping range. In the foregoing method, repeated obstacles between different sensing groups can be removed. This ensures that there are no repeated obstacles in the obstacles corresponding to the compute group, and improves obstacle detection accuracy.

In another possible design, a specific method in which the controller performs the second deduplication processing on the first deduplication results corresponding to the at least two sensing groups with the overlapping range may be as follows: The controller performs matching against an obstacle in a fourth obstacle attribute list, starting from a first obstacle that is not marked as "fused" in a third obstacle attribute list, until all obstacles in the third obstacle attribute list are marked as "fused"; and when there is a matched obstacle in the fourth obstacle attribute list, the controller combines attribute data of the obstacle in the third obstacle list and the fourth obstacle list, combines attribute data of an obstacle near the obstacle in the third obstacle list and the fourth obstacle list, and marks the obstacle and the obstacle near the obstacle as "fused"; or when there is no matched obstacle in the fourth obstacle attribute list, the controller marks the obstacle as "fused", where the third obstacle attribute list is an obstacle attribute list obtained after deduplication results corresponding to C sensing groups in M sensing groups in any compute group are fused, the fourth obstacle attribute list is an obstacle attribute list obtained after deduplication results corresponding to D sensing groups are fused, M is an integer greater than or equal to 2, C is an integer greater than or equal to 1, D is an integer greater than or equal to 1, and C+D=M.

In the foregoing method, attribute data of same obstacles corresponding to all the sensing groups in the compute group may be combined, so that there are no repeated obstacles in the obstacle attribute list corresponding to the compute group, thereby improving obstacle detection accuracy. In addition, repeated obstacles are determined based on a relationship between the obstacle and a nearby obstacle in a fusion process, and this can improve deduplication efficiency.

In another possible design, a specific method in which the controller performs the second deduplication processing on first deduplication results corresponding to the plurality of compute groups may be as follows: The controller performs matching against an obstacle in a sixth obstacle attribute list, starting from a first obstacle that is not marked as "fused" in a fifth obstacle attribute list, until all obstacles in the fifth obstacle attribute list are marked as "fused"; and when there is a matched obstacle in the sixth obstacle attribute list, the controller combines attribute data of the obstacle in the fifth obstacle list and the sixth obstacle list, combines attribute data of an obstacle near the obstacle in the fifth obstacle list and the sixth obstacle list, and marks the obstacle and the obstacle near the obstacle as "fused"; or when there is no matched obstacle in the sixth obstacle attribute list, the controller marks the obstacle as "fused", where the fifth obstacle attribute list is an obstacle attribute list obtained after E obstacle attribute lists in obstacle attribute lists corresponding to L compute groups are fused, the sixth obstacle attribute list is an obstacle attribute list obtained after F obstacle attribute lists are fused, L is a total quantity of compute groups, L is an integer greater than or equal to 2, E is an integer greater than or equal to 1, F is an integer greater than or equal to 1, and E+F=L. In the foregoing method, attribute data of same obstacles corresponding to all compute groups can be combined, so that there are no repeated obstacles in the obstacle attribute list corresponding to a final obstacle detection result, thereby improving obstacle detection accuracy. In addition, repeated obstacles are determined based on a relationship between the obstacle and a nearby obstacle in a fusion process, and this can improve deduplication efficiency.

In another possible design, there is a matched obstacle when the following conditions are met: a timestamp difference of two obstacles is less than a preset range, the two obstacles are of a same obstacle type, a position deviation between the two obstacles is within a preset range, and frame areas of the two obstacles overlap. In the foregoing method, it can be accurately determined that the two obstacles are same obstacles, and then attribute data of the same obstacles is combined, thereby achieving an objective of obstacle deduplication.

According to a second aspect, this application provides a trajectory planning apparatus. The trajectory planning apparatus includes modules or units, for example, a processing unit and an obtaining unit configured to perform the trajectory planning method according to any one of the first aspect or the possible designs of the first aspect.

According to a third aspect, this application provides a controller. The controller includes a processor and a storage. When the controller runs, the processor executes computer-executable programs or instructions stored in the storage, so that the controller performs the corresponding method according to any one of the first aspect or the possible designs of the first aspect.

According to a fourth aspect, this application provides a smart car. The smart car may include the trajectory planning apparatus according to any one of the second aspect or the intelligent driving domain controller according to any one of the third aspect.

According to a fifth aspect, this application provides a vehicle-mounted system. The vehicle-mounted system may include the foregoing controller and the foregoing plurality of sensors.

According to a sixth aspect, this application provides a computer-readable storage medium. The computer-readable storage medium stores programs or instructions. When the programs or instructions are run on a computer, the computer is enabled to perform the method according to any one of the first aspect or the possible designs of the first aspect.

According to a seventh aspect, this application provides a computer program product including instructions. When the instructions are run on a computer, the computer is enabled to perform the method according to any one of the first aspect or the possible designs of the first aspect.

In this application, on the basis of the implementations according to the foregoing aspects, the implementations may be combined to provide more implementations.

## BRIEF DESCRIPTION OF DRAWINGS

FIG. 1 is a schematic diagram of an architecture of a vehicle-mounted system to which a trajectory planning method is applicable according to this application;
FIG. 2 is a schematic diagram of another architecture of a vehicle-mounted system to which a trajectory planning method is applicable according to this application;
FIG. 3 is a schematic diagram of another architecture of a vehicle-mounted system to which a trajectory planning method is applicable according to this application;
FIG. 4 is a schematic flowchart of a trajectory planning method according to this application;
FIG. 5 is a schematic diagram of a point cloud according to this application;
FIG. 6 is a schematic diagram of a structure of a mask R-CNN model according to this application;
FIG. 7 is a schematic diagram of instance segmentation according to this application;
FIG. 8A and FIG. 8B are a schematic diagram of an obstacle attribute list according to this application;
FIG. 9 is a diagram of fusion of obstacle attribute lists according to this application;
FIG. 10 is a schematic diagram of an overlapping range of two sensing groups according to this application;
FIG. 11A to FIG. 11C are a schematic flowchart of an example of a trajectory planning method according to this application;
FIG. 12 is a schematic diagram of a structure of a trajectory planning apparatus according to this application; and
FIG. 13 is a diagram of a structure of a controller according to this application.

## DESCRIPTION OF EMBODIMENTS

The following further describes in detail this application with reference to accompanying drawings.

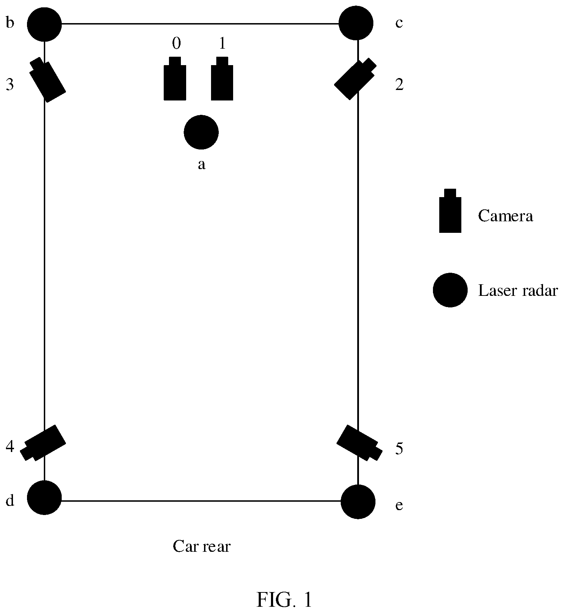

A trajectory planning method provided in embodiments of this application is applicable to a vehicle-mounted system, and the vehicle-mounted system may be deployed in a smart car. An architecture of the vehicle-mounted system includes at least a plurality of sensors and a controller. The plurality of sensors may include one or more of a laser radar, a camera, a millimeter-wave radar, and the like. For example, FIG. 1 is a schematic diagram of a layout of a plurality of sensors in a smart car. For example, in FIG. 1, the plurality of sensors include a total of five laser radars (a laser radar a, a laser radar b..., and a laser radar e), and a total of six cameras (cameras 0 to 5).

It should be understood that FIG. 1 is merely an example. More or fewer sensors may be included, or another type of sensor may be included. This is not limited in this application.

The plurality of sensors separately collect environment data and enter the environment data into the controller, where data collected by a laser radar is a point cloud, and data collected by a camera is an image. The plurality of sensors have corresponding sensing ranges, and a sensing range of each sensor is a range in which each sensor detects an obstacle. The controller may divide the plurality of sensors into a plurality of sensing groups according to a preset principle. For example, the controller may put, based on the sensing ranges of the plurality of sensors, at least two sensors whose sensing ranges overlap into one sensing group. For example, in FIG. 1, the controller may put one camera and one laser radar whose sensing ranges overlap into one sensing group, and the sensors may be divided into the following six groups:

sensing group (1): the camera 0 and the laser radar a;
sensing group (2): the camera 3 and the laser radar b;
sensing group (3): the camera 1 and the laser radar a;
sensing group (4): the camera 4 and the laser radar d;
sensing group (5): the camera 2 and the laser radar c; and
sensing group (6): the camera 5 and the laser radar e.

The controller may determine, based on installation positions of sensors in sensing groups, that there is a possibility of overlapping in total sensing ranges between the sensing groups, and then allocate data collected by sensors in two or more sensing groups whose sensing ranges are overlap to one sensing compute unit for deduplication processing. For example, the controller allocates data collected in the sensing group (1) and the sensing group (2) to a sensing compute unit A, allocates data collected in the sensing group (3) and the sensing group (5) to a sensing compute unit B, and allocates data collected in the sensing group (4) and the sensing group (6) to a sensing compute unit C.

Optionally, a same sensor may belong to one sensing group, or a same sensor may belong to a plurality of sensing groups.

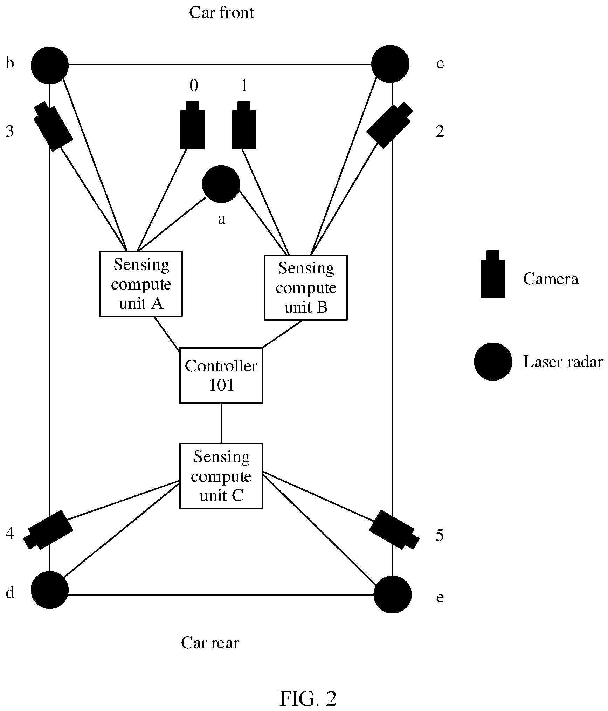

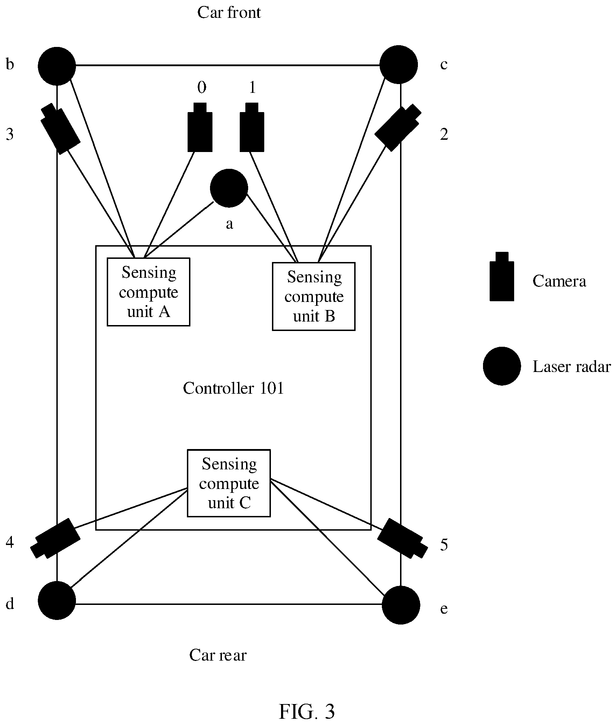

Optionally, the architecture of the vehicle-mounted system may include a plurality of sensing compute units. The sensing compute unit is configured to perform deduplication processing on data collected in several sensing groups of the sensing groups obtained through division, for example, sensing compute units A, B, and C shown in FIG. 1. The sensing compute unit may be independent of the controller in a form of a plug-in card or the like, such as deployment relationships between a controller 101 and sensing compute units A, B, and C in a schematic diagram of an architecture of a vehicle-mounted system shown in FIG. 2. Alternatively, the sensing compute unit may be deployed in the controller, such as deployment relationships between a controller 101 and sensing compute units A, B, and C in a schematic diagram of an architecture of a vehicle-mounted system shown in FIG. 3.

The controller 101 in FIG. 2 or FIG. 3 may further perform deduplication on results obtained through processing by the sensing units A, B, and C to obtain a final obstacle detection result, and plan a trajectory of a smart car based on the final obstacle detection result.

Optionally, the controller 101 is specifically implemented by a processor, and the processor includes a central processing unit (central processing unit, CPU) or a device or module that has a processing function. For example, the controller 101 may be a vehicle-mounted mobile data center (mobile data center, MDC).

It should be noted that quantities and layouts of the controllers, the sensors, or the sensing compute units in FIG. 1, FIG. 2, and FIG. 3 are merely examples, and there may be a plurality of implementations in practice. This is not specifically limited herein in this application. FIG. 1 shows only the layout of the plurality of sensors in the smart car. FIG. 2 and FIG. 3 each are a schematic diagram of a layout of the controller and the sensing compute units on the basis of FIG. 1. In FIG. 2, the sensing compute unit is independent of the controller, that is, the sensing compute unit and the controller are independently deployed. In FIG. 3, the sensing compute unit is a part of the controller, that is, the sensing compute unit is deployed in the controller. The following trajectory planning solution is described by using an example in which a sensing compute unit is deployed in a controller and the controller is an execution body.

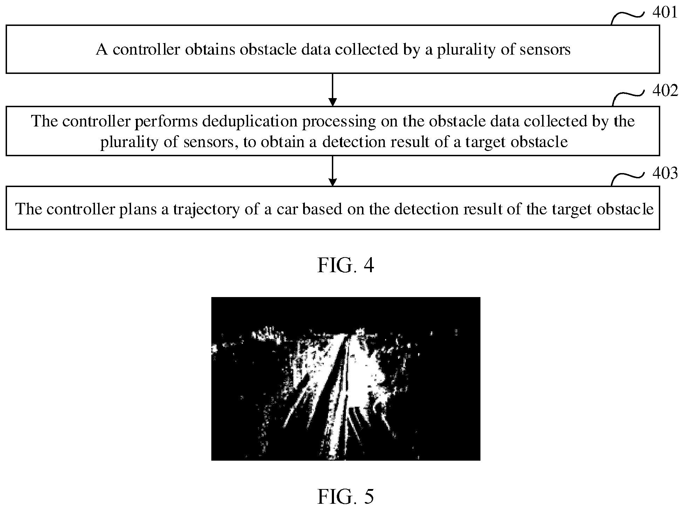

On the basis of the foregoing descriptions, an embodiment of this application provides a trajectory planning method, applicable to the system shown in FIG. 1 or FIG. 3. The method is implemented by a controller in a smart car. Refer to FIG. 4. A specific procedure of the method may include the following steps.

Step 401: The controller obtains obstacle data collected by a plurality of sensors, where the plurality of sensors include at least two types of sensors.

An obstacle is a general term of terrain, a ground object, an engineering facility, and the like that can block or delay movement of a car. The obstacle in this application may be a person, a car, a road infrastructure, a road sign, or the like.

The plurality of sensors may include a plurality of types of sensors such as a laser radar, a camera, and a millimeter-wave radar. Obstacle data collected by a laser radar is a point cloud, which may also be referred to as a point cloud image. The point cloud image may be a three-dimensional image, for example, a point cloud image shown in FIG. 5. Obstacle data collected by a camera is an image, and is specifically a two-dimensional red R (red) green G (green) blue B (blue) image. Obstacle data collected by a millimeter-wave radar is also a point cloud.

Step 402: The controller performs deduplication processing on the obstacle data collected by the plurality of sensors, to obtain a detection result of a target obstacle.

In a specific implementation, when the controller performs the deduplication processing on the obstacle data collected by the plurality of sensors, to obtain the detection result of the target obstacle, a specific method may be as follows:

The controller divides the plurality of sensors into a plurality of sensing groups based on sensing ranges of the plurality of sensors, where any sensing group includes at least two sensors, types of the at least two sensors are at least two types, sensing ranges of sensors in any sensing group overlap, and a total range of the sensing ranges of the sensors in all the sensing groups covers a panoramic range of the smart car.

The controller divides the plurality of sensing groups into a plurality of compute groups based on a maximum range including sensing ranges of the plurality of sensing groups, where any compute group includes at least two sensing groups, and maximum ranges of the at least two sensing groups overlap.

The controller performs first deduplication processing on obstacle data collected by sensors in each compute group.

The controller performs second deduplication processing on first deduplication results corresponding to the plurality of compute groups, to obtain a second deduplication result, that is, to obtain the detection result of the target obstacle.

Specifically, a sensing range of each sensor, namely, a range for detecting an obstacle in an ambient environment, is determined based on a parameter of the sensor. When dividing the plurality of sensors into the plurality of sensing groups based on the sensing ranges of the plurality of sensors, the controller may put sensors whose sensing ranges overlap into one sensing group, where the sensors whose sensing ranges overlap mean that two sensors whose sensing ranges partially overlap are put into one sensor group, and different thresholds may be set for a partially overlapping range according to specific implementation requirements to control a size of an overlapping region, and further perform division into sensor groups on the basis of such setting. Optionally, a plurality of sensors whose overlapping range is greater than a preset overlapping rate may be put into one sensing group. The preset overlapping rate is a percentage of an overlapping range between sensors in a total sensing range of several sensors whose sensing ranges overlap. Certainly, sensors whose overlapping range has a maximum overlapping rate may be put into one sensing group in practice as much as possible. Specifically, it depends on installation positions of the sensors in the smart car when the controller performs division. Usually, only sensors whose installation positions are close to each other possibly have an overlapping range. For example, when the controller divides the sensors into sensing groups in FIG. 1, each sensing group includes two types of sensors: one camera and one laser radar. Installation positions of sensors in each sensing group are close to each other, and an overlapping range is as large as possible. In addition, it is ensured that the total sensing range of all the sensing groups covers the panoramic range of the smart car, that is, covers all angles in 360 degrees of the smart car.

In an example of an implementation, on the basis of the installation positions of the sensors that form different sensing groups, a maximum range including the sensing ranges of the sensors in each sensing group may be determined, and at least two sensing groups whose sensing ranges overlap in the sensing groups are put into one compute group. Certainly, an overlapping range between the sensing groups may also be based on a preset overlapping rate. The division in FIG. 1 is still used as an example. The sensing group (1) and the sensing group (2) obtained through division are put into one compute group, the sensing group (3) and the sensing group (5) are put into one compute group, and the sensing group (4) and the sensing group (6) are put into one compute group.

Further, after dividing the sensing groups into the plurality of compute groups, the controller may perform the deduplication processing on the obstacle data in all the compute groups simultaneously. In an optional implementation, a specific method in which the controller performs the deduplication processing on obstacle data collected by sensors in any compute group may be as follows: After performing the first deduplication processing on obstacle data collected by sensors in each sensing group in the any compute group, the controller performs the second deduplication processing on first deduplication results corresponding to at least two sensing groups in the any compute group, to obtain a second deduplication result corresponding to the any compute group.

It should be noted that the first deduplication processing means performing deduplication on obstacle data collected by sensors in a sensing group, and the second deduplication processing means performing deduplication on data between sensing groups. Deduplication performed on data between compute groups below is also referred to as second deduplication processing.

It should be noted that the controller may include a plurality of units or modules, for example, a sensing compute unit, and each unit or module performs the foregoing deduplication processing on one of the compute groups.

In an optional implementation, a specific method in which the controller performs the first deduplication processing on obstacle data collected by sensors in any sensing group may be as follows: The controller generates, based on obstacle data collected by each sensor in the any sensing group, an obstacle attribute list corresponding to the sensor, where the obstacle attribute list corresponding to the sensor includes at least one obstacle attribute; and fuses obstacle attribute lists corresponding to all sensors in the any sensing group to obtain an obstacle attribute list corresponding to the any sensing group, that is, to obtain a first deduplication result corresponding to the any sensing group.

In an optional implementation, when processing obstacle data collected by each sensor in a sensing group, a specific method in which the controller generates, based on the obstacle data collected by the sensor, an obstacle attribute list corresponding to the sensor may be as follows: When the sensor is a laser radar, the controller projects point cloud data onto a two-dimensional RGB image based on preset virtual camera parameters, where obstacle data collected by the laser radar is the point cloud data; and performs instance segmentation on a two-dimensional RGB image obtained after the projection, to obtain an obstacle attribute list corresponding to the laser radar; or when the sensor is a camera, the controller performs instance segmentation on a two-dimensional RGB image, to obtain an obstacle attribute list corresponding to the camera, where obstacle data collected by the camera is the two-dimensional RGB image.

For example, when the sensor is the laser radar, a process in which the controller projects the point cloud data onto the two-dimensional RGB image based on the preset virtual camera parameters may be as follows:

(1) Preset the virtual camera parameters
A camera is defined as, for example, C=K[R T], where R indicates a rotation part of an extrinsic parameter of the camera, and is a matrix of 3x3, for example, R is represented in the following matrix:

$$R = R_x * R_y * R_z = \begin{bmatrix} 1 & 0 & 0 \\ 0 & \cos\alpha & -\sin\alpha \\ 0 & \sin\alpha & \cos\alpha \end{bmatrix} \begin{bmatrix} \cos\beta & 0 & \sin\beta \\ 0 & 1 & 0 \\ -\sin\beta & 0 & \cos\beta \end{bmatrix} \begin{bmatrix} \cos\gamma & -\sin\gamma & 0 \\ \sin\gamma & \cos\gamma & 0 \\ 0 & 0 & 1 \end{bmatrix},$$

where

$\alpha$, $\beta$, *and y* indicate angles at which the camera rotates around an x-axis, a y-axis, and a z-axis respectively;
T is a matrix of 3x1, and indicates a translation parameter of the camera; and
K is an intrinsic parameter of the camera, and is used to calibrate intrinsic parameters such as a focal length and distortion of the camera, for example, K is shown in the following matrix:

$$K = \begin{pmatrix} \alpha_x & \gamma & u_0 \\ 0 & \alpha_y & v_0 \\ 0 & 0 & 1 \end{pmatrix},$$

where

$\alpha_x$ and $\alpha_y$ are focal lengths of the camera, and the two values are usually equal; $\gamma$ is a coordinate axis tilt parameter, and is 0 in an ideal case; and $u_0$ and $v_0$ are coordinates of a principal point (relative to an imaging plane).

(2) The point cloud data is projected onto the two-dimensional RGB image based on the preset virtual camera parameters. A Katz (Katz) projection method may be used herein, or certainly another method may be used. This is not specifically limited in this application.

In a projection process, it is important for the controller to determine points in the point cloud that are visible to the camera. A Katz projection algorithm is used as an example. The algorithm can be used to not only remove all points that are invisible to the camera in the point cloud, but also eliminate points that are close to each other in the point cloud to accelerate the algorithm. The points that are close to each other may be points whose distance from each other is less than a preset threshold. A sphere with a radius of R is first defined around all points in the point cloud and the camera C is placed in an origin. The spherical rollover of a point in the point cloud is calculated by using the following formula:

$$\tilde{p}_i = f(p_i) = p_i + 2(R - \|p_i\|) \frac{p_i}{\|p_i\|},$$

where
$\tilde{p}_i$ indicates coordinates of a point after the rollover, and $p_i$ indicates coordinates of the point before the rollover.
When determining the points visible to the camera, the controller projects a 3D point into a pixel by using the following formula: $\hat{p}_i = C\tilde{p}_i$, where $\hat{p}_i$ indicates the coordinates of the point projected onto an image, and C is a defined camera parameter.
Because a plurality of points are projected into a same pixel, the controller calculates weights of different point clouds projected into corresponding image pixels by using the following Gaussian function:

$$w = \frac{1}{2\pi \cdot 0.25} e^{-0.5 \frac{dist^2}{0.25}},$$

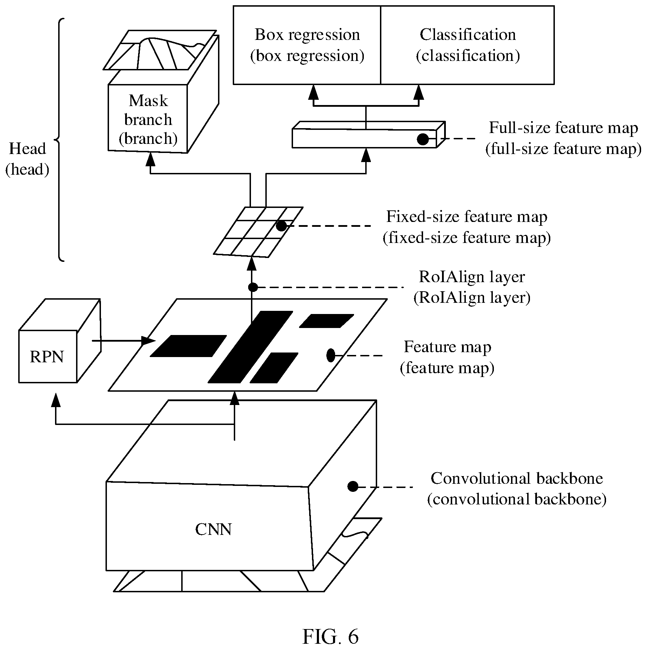

where
dist indicates a distance between a pixel and a point location.
In an optional implementation, the method in which the controller performs instance segmentation on the two-dimensional RGB image obtained after the point cloud data collected by the laser radar is projected to obtain the obstacle attribute list corresponding to the laser radar is the same as the method in which the controller performs instance segmentation on the two-dimensional RGB image collected by the camera to obtain the obstacle attribute list corresponding to the camera. Specifically, when performing instance segmentation on any two-dimensional RGB image, the controller may specifically perform instance segmentation on the two-dimensional RGB image by using a mask R-CNN model. A structure of the mask R-CNN model may be shown in FIG. 6.

A convolutional neural network (convolutional neural network, CNN) is a series of convolutional layers used to extract feature maps (feature maps) of an image, for example, may be VGG16, VGG19, GooLeNet, ResNet50, or ResNet101, and is usually a structure of the ResNet101.

A region proposal network (region proposal network, RPN) is used to help a network recommend regions of interest and extract feature maps of the regions of interest.

A fully connected layer (Fully connected layer) identifies a type and a frame position of an obstacle on each fixed-size feature map (fixed-size feature map).

A mask branch (Mask branch) performs semantic segmentation.

Specifically, the controller may enter the two-dimensional RGB image into the mask R-CNN model to obtain an instance segmentation result. For example, the instance segmentation result may include a type of an obstacle, a contour of the obstacle, and a rectangle of the obstacle.

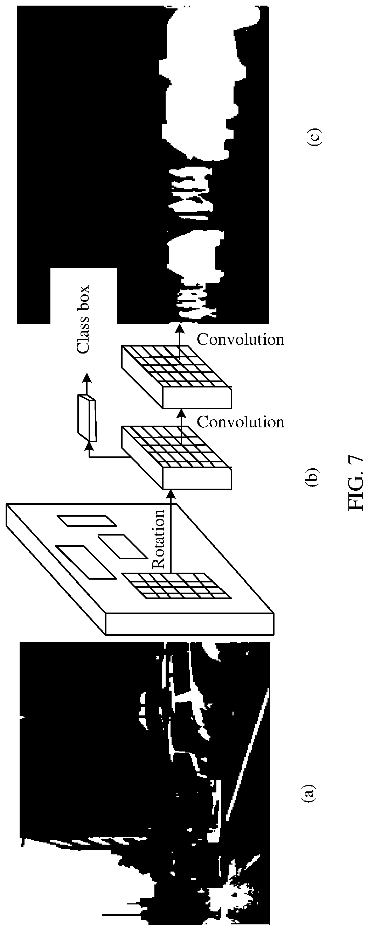

For example, FIG. 7 is a schematic diagram of instance segmentation. (a) in FIG. 7 is a two-dimensional RGB image, (b) in FIG. 7 is a schematic diagram of a mask R-CNN model, and (c) in FIG. 7 shows an instance segmentation result.

Further, the controller may obtain, based on the instance segmentation result, the obstacle attribute list corresponding to the sensor. For example, any obstacle attribute list may include an identity (identity, ID) of an obstacle, a timestamp, a type of the obstacle (for example, a person or a car), a position of the obstacle, a size (a length and a width) of the obstacle, and the like. Optionally, any obstacle list may further include at least one of the following: a contour of the obstacle, a relationship between the obstacle and a nearby obstacle, a relative speed, and a pose of the obstacle (for example, a car front orientation). The position of the obstacle may be coordinates of a central point of the obstacle, and may be represented by using two-dimensional coordinates or three-dimensional coordinates. The relationship between the obstacle and the nearby obstacle may be represented by using a vector pointing from the central point of the obstacle to a central point of the nearby obstacle.

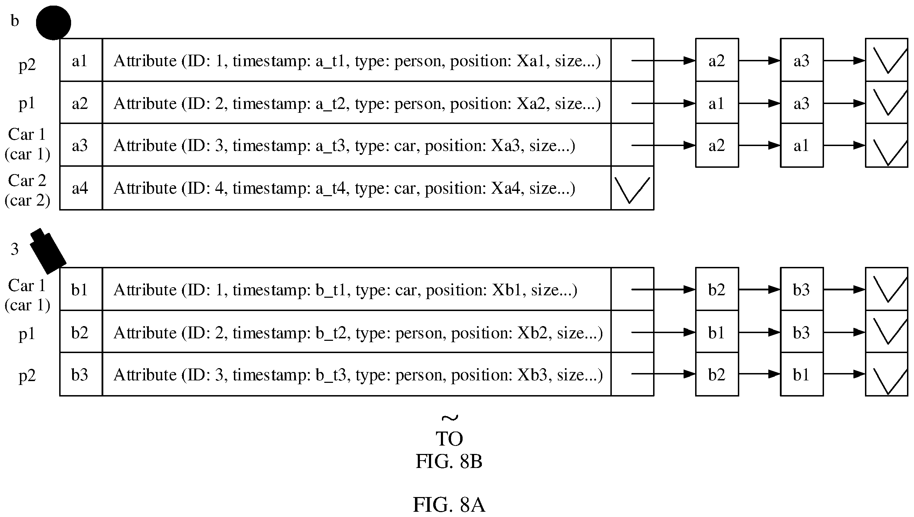

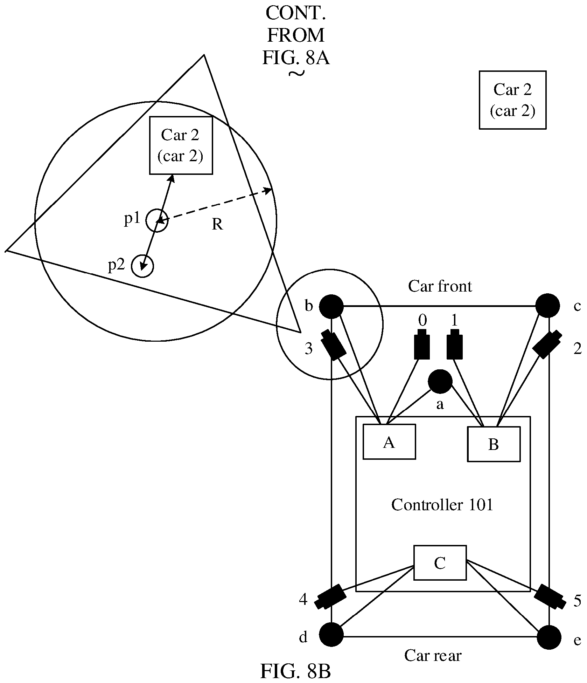

The sensing group (2) including the camera 1 and the laser radar b in FIG. 1 is used as an example. Refer to FIG. 8A and FIG. 8B. A region in a triangle indicates a sensing range of the camera 3. It can be learned that the sensing range of the camera 3 includes two persons P1 and P2 and one car, namely, a car 1 (car 1). A sensing range of the laser radar b covers 360 degrees. After a part from an ego vehicle is deducted, obstacles detected by the laser radar b include two persons PI and P2, and two cars, namely, the car 1 (car 1) and a car 2 (car 2). Obstacle attribute lists generated by processing data collected by the laser radar b and the camera a are shown in lists in FIG. 8A and FIG. 8B. In the obstacle attribute lists, only some attributes are used as examples, and do not represent all attributes. The relationship between the obstacle and the nearby obstacle is represented by using a vector pointing from the central point of the obstacle to the central point of the nearby obstacle. In this example, the person PI is used as an example. A circle is drawn by using a central point of the person PI as an origin and R as a radius. The circle includes the obstacles P2 and car 1 other than the person PI. The relationship between PI and the nearby obstacles may be represented by using vectors pointing from the central point of P1 that is used as an origin to central points of P2 and the car 1.

In an optional implementation, a specific method in which the controller fuses obstacle attribute lists corresponding to all sensors in any sensing group may be as follows: The controller performs matching against an obstacle in a second obstacle attribute list, starting from a first obstacle that is not marked as "fused" in a first obstacle attribute list, until all obstacles in the first obstacle attribute list are marked as "fused"; and when there is a matched obstacle in the second obstacle attribute list, the controller combines attribute data of the obstacle in the first obstacle list and the second obstacle list, combines attribute data of an obstacle near the obstacle in the first obstacle list and the second obstacle list, and marks the obstacle and the obstacle near the obstacle as "fused"; or when there is no matched obstacle in the second obstacle attribute list, the controller marks the obstacle as "fused", where the first obstacle attribute list is an obstacle attribute list obtained after A obstacle attribute lists in obstacle attribute lists corresponding to N sensors in the any sensing group are fused, the second obstacle attribute list is an obstacle attribute list obtained after B obstacle attribute lists are fused, N is an integer greater than or equal to 2, A is an integer greater than or equal to 1, B is an integer greater than or equal to 1, and A+B=N.

Specifically, when N is equal to 2, that is, one sensing group includes only two sensors, for example, a laser radar and a camera, the first obstacle attribute list is one of an obstacle attribute list obtained by processing a point cloud collected by the laser radar and an obstacle attribute list obtained by processing an image collected by the camera, and the second obstacle attribute list is the other. Descriptions are provided by using an example in which the first obstacle list is the list generated based on the image collected by the camera. When an obstacle in the obstacle attribute list generated based on the point cloud is matched against from a first obstacle that is not marked as "fused" in the obstacle attribute list generated based on the image, the following principle may be specifically followed: Whether a timestamp difference of the two obstacles is within a preset range is first determined. If the timestamp difference is not within the preset range, it indicates that the two obstacles do not match, the corresponding obstacle in the obstacle attribute list obtained based on the point cloud is directly marked as "fused", and it is considered that the obstacle does not have a repeated obstacle. If the timestamp difference is within the preset range, whether types of the two obstacles are the same is further determined. If the types are different, it is considered that the two obstacles do not match, the corresponding obstacle in the obstacle attribute list obtained based on the point cloud is marked as "fused", and it is considered that the obstacle does not have a repeated obstacle. If the types are the same, whether a position deviation between the two obstacles is within a preset range is further determined. If the position deviation is not within the preset range, it is considered that the two obstacles do not match, the corresponding obstacle in the obstacle attribute list obtained based on the point cloud is marked as "fused", and it is considered that the obstacle does not have a repeated obstacle. If the position deviation is within the preset range, it is further calculated, based on sizes (lengths and widths) of the obstacles, whether an overlapping degree between rectangles of the obstacles reaches a preset overlapping degree. If the overlapping degree does not reach the preset overlapping degree, it is considered that the two obstacles do not match, the corresponding obstacle in the obstacle attribute list obtained based on the point cloud is marked as "fused", and it is considered that the obstacle does not have a repeated obstacle. If the overlapping degree reaches the preset overlapping degree, it is considered that the two obstacles match, that is, the matched obstacle is found, and the two obstacles are both marked as "fused".

Certainly, optionally, to make the matching more accurate, in addition to the foregoing condition, whether the obstacles match may be determined by using another obstacle attribute, for example, by determining whether relationships with a nearby obstacle are consistent. A specific matching method is similar, and details are not described herein in this application.

In an optional implementation, after the two obstacles in the foregoing two obstacle lists are matched, in order to reduce a calculation process, matching may be performed on nearby obstacles based on relationships between the obstacles and the nearby obstacles. For example, after a1 and b3 in FIG. 8A and FIG. 8B are matched, a process of performing matching on an obstacle a2 near a1 is used as an example. An error value $\Delta d1$ between a2 and b2 and an error value $\Delta d2$ between a2 and b1 may be calculated by using a formula $\Delta d =$

$$\sqrt[2]{((Dai.x - Dbj.x)^2 + (Dai.y - Dbj.y)^2)}/\sqrt[2]{Dai.x^2 + Dai.y^2}$$ . Then a smaller value in the two values is determined and if the smaller value is less than a threshold d, it is considered that a2 and b2 or b1 corresponding to the smaller value are matched. Dai is a vector of a relationship between a1 and a nearby obstacle, Dbj is a vector of a relationship between b3 and a nearby obstacle, x is an x-axis direction value of the relationship vector, and y is a y-axis direction value of the relationship vector.

Based on the foregoing matching result, attribute data of the two matched obstacles is fused, that is, a process of fusing attribute data is performed. In this way, attribute data of same obstacles can be fused into attribute data of one obstacle, so that there are no same obstacles after the fusion, thereby achieving an objective of deduplication.

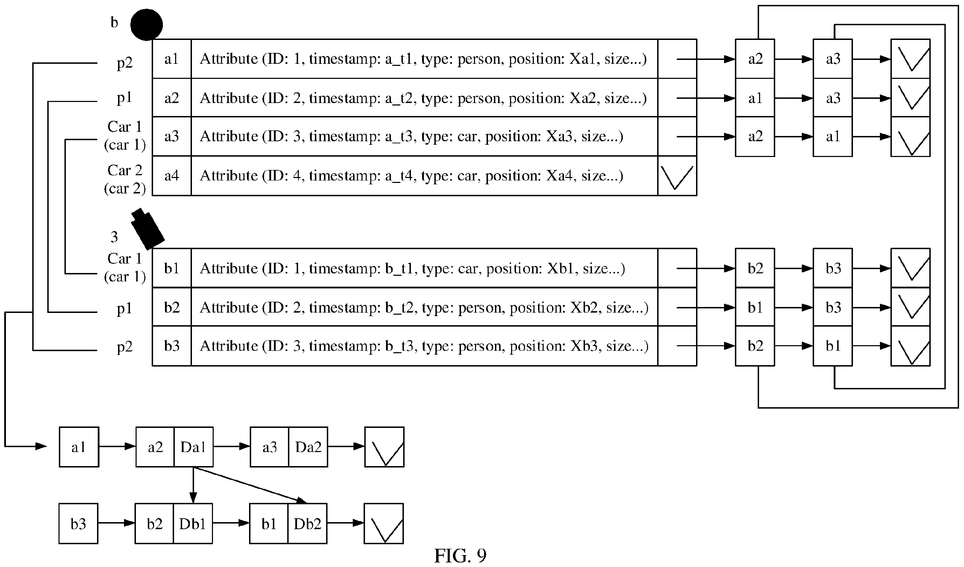

Then, the foregoing process is repeated until all obstacles in the obstacle attribute list generated based on the point cloud are marked as "fused". In this way, all data in the two lists may be fused into one obstacle attribute list, and there is no repeated obstacle in the obstacle attribute list obtained after fusion. For example, FIG. 9 is a schematic diagram of a fusion process. After final fusion, a1 and b3 are fused, a2 and b2 are fused, a3 and b1 are fused, and a4 remains unchanged. In this way, an obstacle attribute list obtained after fusion includes attribute data of four obstacles. The obtained attribute list of the fused obstacles may be an attribute list corresponding to one sensing group.

In an optional implementation, before fusing the data of the two obstacles, the controller may first perform, based on the timestamp difference $\Delta t$, prediction compensation on a location X of an obstacle with a later timestamp based on a speed V of the obstacle, where a formula is as follows: $X = X + \Delta t * V$; and then fuse a compensated location when locations are fused.

The foregoing is a case in which N is equal to 2, that is, there are only two sensors in one sensing group. When N is greater than or equal to 3, that is, there are three or more sensors in one sensing group, obstacle attribute lists corresponding to any two sensors may be first fused, and then an obstacle attribute list obtained after the fusion is fused with an obstacle attribute list corresponding to any one of remaining sensors until obstacle attribute lists corresponding to all sensors are fused into one obstacle attribute list. Certainly, pairwise fusion may be first performed on obstacle attribute lists corresponding to the plurality of sensors, and then pairwise fusion is performed on obstacle attribute lists obtained after fusion, until one obstacle attribute list is obtained. Herein, two obstacle attribute lists fused in a last step may be used as the first obstacle attribute list and the second obstacle attribute list respectively. Certainly, obstacle attribute lists corresponding to sensors of a same type in the plurality of sensors may be fused, and then two obtained obstacle attribute lists are fused. Certainly, there may be a plurality of other methods, provided that a method that can fuse all the obstacle attribute lists into one obstacle attribute list is used. This is not limited in this application. Specifically, a method for fusing any two obstacle attribute lists is the same as the foregoing method for fusing the two obstacle attribute lists when N is equal to 2, and reference may be made to each other. Details are not described herein again. In an optional implementation, in a pairwise fusion process, obstacle attribute lists corresponding to sensors of a same type may be first fused, and then obtained obstacle attribute list is fused with obstacle attribute lists corresponding to sensors of different types.

In the foregoing method, an obstacle attribute list corresponding to each sensing group may be obtained, that is, a first deduplication result corresponding to each sensing group is obtained, thereby achieving an objective of deduplication in the sensing group. In an optional implementation, a specific method in which the controller performs second deduplication processing on first deduplication results corresponding to at least two sensing groups in any compute group may be as follows: The controller determines, based on a position of an obstacle in a first deduplication result corresponding to each sensing group, a sensing range corresponding to each sensing group; and the controller determines an overlapping range between the at least two sensing groups based on the sensing range corresponding to each sensing group, and performs the second deduplication processing on the first deduplication results corresponding to the at least two sensing groups with the overlapping range.

In an optional implementation, a specific method in which the controller determines, based on the position of the obstacle in the first deduplication result corresponding to each sensing group, the sensing range corresponding to each sensing group may be as follows: The controller projects an obstacle corresponding to each sensing group into a three-dimensional coordinate system of an ego vehicle, and determines the sensing range of the obstacle in each sensing group based on coordinates of a central point of the obstacle, where in the three-dimensional coordinate system of the ego vehicle, a center of a rear axis of the car may be used as an origin, a z-axis is perpendicular to a horizontal direction, a positive direction of an x-axis points to a car front, and a y-axis is a horizontal direction.

In an optional implementation, the controller may project the central point $\begin{bmatrix} x_1 \\ y_1 \\ z_1 \end{bmatrix}$ of the obstacle in each sensing group into $\begin{bmatrix} x_0 \\ y_0 \\ z_0 \end{bmatrix}$ in the three-dimensional coordinate system of the ego vehicle by using the following formula:

$$\begin{bmatrix} x_0 \\ y_0 \\ z_0 \end{bmatrix} = \begin{bmatrix} \cos\alpha & -\sin\alpha & 0 \\ \sin\alpha & \cos\alpha & 0 \\ 0 & 0 & 1 \end{bmatrix} * \begin{bmatrix} \cos\beta & -\sin\beta & 0 \\ \sin\beta & \cos\beta & 0 \\ 0 & 0 & 1 \end{bmatrix} * \begin{bmatrix} \cos\gamma & -\sin\gamma & 0 \\ \sin\gamma & \cos\gamma & 0 \\ 0 & 0 & 1 \end{bmatrix} \begin{bmatrix} x_1 \\ y_1 \\ z_1 \end{bmatrix} + T_{xyz},$$

where
$\alpha$, $\beta$, and $\gamma$ are rotation angles in x, y, and z axes from a coordinate system of the original obstacle to the coordinate system of the ego vehicle, and $T_{xyz}$ is a translation matrix of the x, y, and z axes in changed the coordinate system.

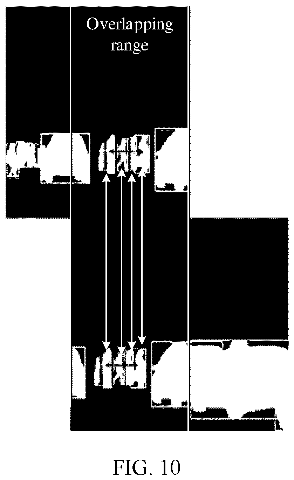

In an optional implementation, the controller determines the sensing range of the obstacle in each sensing group based on coordinates of the central point of the obstacle, and may use an overall coverage range of a circular region with the central point of each obstacle as an origin and a preset radius as a radius as the sensing range of the obstacle in each sensing group. Further, the overlapping range of the sensing groups is determined based on an empirical value with reference to installation positions of the sensors in each sensing group. For example, an overlapping range of two overlapping sensing groups may be shown in FIG. 10.

In an optional implementation, a specific method in which the controller performs the second deduplication processing on the first deduplication results corresponding to the at least two sensing groups with the overlapping range may be as follows: The controller performs matching against an obstacle in a fourth obstacle attribute list, starting from a first obstacle that is not marked as "fused" in a third obstacle attribute list, until all obstacles in the third obstacle attribute list are marked as "fused"; and when there is a matched obstacle in the fourth obstacle attribute list, the controller combines attribute data of the obstacle in the third obstacle list and the fourth obstacle list, combines attribute data of an obstacle near the obstacle in the third obstacle list and the fourth obstacle list, and marks the obstacle and the obstacle near the obstacle as "fused"; or when there is no matched obstacle in the fourth obstacle attribute list, the controller marks the obstacle as "fused", where the third obstacle attribute list is an obstacle attribute list obtained after deduplication results corresponding to C sensing groups in M sensing groups in any compute group are fused, the fourth obstacle attribute list is an obstacle attribute list obtained after deduplication results corresponding to D sensing groups are fused, M is an integer greater than or equal to 2, C is an integer greater than or equal to 1, D is an integer greater than or equal to 1, and C+D=M.

Specifically, when M is equal to 2, that is, one compute group has two sensing groups, an obstacle attribute list corresponding to one sensing group is the third obstacle attribute list, and an obstacle attribute list corresponding to the other sensing group is the fourth obstacle attribute list. For specific descriptions of a specific process of fusing the two obstacle attribute lists, refer to the specific process of fusing the two obstacle attribute lists when there are two sensors (that is, N is equal to 2) in the sensing group. Principles are similar, and details are not described herein again.

When M is greater than or equal to 3, that is, there are three or more sensing groups in a compute group, obstacle attribute lists corresponding to any two sensing groups may be first fused, and then an obstacle attribute list obtained after fusion is fused with an obstacle attribute list corresponding to any one of remaining sensing groups until obstacle attribute lists corresponding to all the sensing groups are fused into one obstacle attribute list. Certainly, pairwise fusion may be first performed on obstacle attribute lists corresponding to the plurality sensing groups, and then pairwise fusion is performed on obstacle attribute lists obtained after fusion, until one obstacle attribute list is obtained. Herein, two obstacle attribute lists fused in a last step may be used as the third obstacle attribute list and the fourth obstacle attribute list respectively. Certainly, there may be a plurality of other methods, provided that a method that can fuse all the obstacle attribute lists into one obstacle attribute list is used. This is not limited in this application. Specifically, a method for fusing any two obstacle attribute lists is the same as the foregoing principle for fusing the two obstacle attribute lists when N is equal to 2, and reference may be made to each other. Details are not described herein again.

In the foregoing method, an obstacle attribute list corresponding to each compute group may be obtained, that is, a first deduplication result corresponding to each compute group is obtained, thereby achieving an objective of deduplication in the compute group. In an optional implementation, a specific method in which the controller performs the second deduplication processing on first deduplication results corresponding to a plurality of compute groups may be as follows: The controller performs matching against an obstacle in a sixth obstacle attribute list, starting from a first obstacle that is not marked as "fused" in a fifth obstacle attribute list, until all obstacles in the fifth obstacle attribute list are marked as "fused"; and when there is a matched obstacle in the sixth obstacle attribute list, the controller combines attribute data of the obstacle in the fifth obstacle list and the sixth obstacle list, combines attribute data of an obstacle near the obstacle in the fifth obstacle list and the sixth obstacle list, and marks the obstacle and the obstacle near the obstacle as "fused"; or when there is no matched obstacle in the sixth obstacle attribute list, the controller marks the obstacle as "fused", where the fifth obstacle attribute list is an obstacle attribute list obtained after E obstacle attribute lists in obstacle attribute lists corresponding to L compute groups are fused, the sixth obstacle attribute list is an obstacle attribute list obtained after F obstacle attribute lists are fused, L is a total quantity of compute groups, L is an integer greater than or equal to 2, E is an integer greater than or equal to 1, F is an integer greater than or equal to 1, and E+F=L.

Specifically, when L is equal to 2, that is, there are two compute groups in total, an obstacle attribute list corresponding to one compute group is the fifth obstacle attribute list, and an obstacle attribute list corresponding to the other compute group is the sixth obstacle attribute list. For specific descriptions of a specific process of fusing the two obstacle attribute lists, refer to the specific process of fusing the two obstacle attribute lists when there are two sensors (that is, N is equal to 2) in the sensing group. Principles are similar, and details are not described herein again.

When L is greater than or equal to 3, that is, there are a total of three or more compute groups, obstacle attribute lists corresponding to any two compute groups may be first fused, and then an obstacle attribute list obtained after fusion is fused with an obstacle attribute list corresponding to any compute group in remaining sensing groups until obstacle attribute lists corresponding to all the compute groups are fused into one obstacle attribute list. Certainly, pairwise fusion may be first performed on obstacle attribute lists corresponding to the plurality compute groups, and then pairwise fusion is performed on obstacle attribute lists obtained after fusion, until one obstacle attribute list is obtained. Herein, two obstacle attribute lists fused in a last step may be used as the fifth obstacle attribute list and the sixth obstacle attribute list respectively. Certainly, there may be a plurality of other methods, provided that a method that can fuse all the obstacle attribute lists into one obstacle attribute list is used. This is not limited in this application. Specifically, a method for fusing any two obstacle attribute lists is the same as the foregoing principle for fusing the two obstacle attribute lists when N is equal to 2, and reference may be made to each other. Details are not described herein again.

In the foregoing method, the objective of deduplication between the compute groups is achieved. Therefore, an obstacle attribute list corresponding to the ego vehicle can be obtained, and the detection result of the target obstacle can be obtained, so as to plan a trajectory of the car.

Step 403: The controller plans the trajectory of the car based on the detection result of the target obstacle.

Specifically, the detection result of the target obstacle includes data of all obstacles around the smart car, and the obstacles are not repeated. In this way, during planning the trajectory of the car, accurate obstacle data can be referred to, and the trajectory is planned accurately, thereby improving safety.

In the foregoing method, in a running process of the smart car, the controller in the smart car can perform deduplication on the obstacle data collected by the plurality of sensors, so as to obtain the effective detection result of the target obstacle, and further plan the trajectory of the smart car based on the detection result of the target obstacle. This can resolve a current problem that an obstacle cannot be effectively detected. This can further resolve a problem of an inaccurate planned trajectory caused when obstacles collected by the plurality of sensors overlap in a current scenario in which there are the plurality of sensors. In the foregoing deduplication process, a group division manner can be proposed with reference to an overlapping relationship between the sensing ranges of the sensors. After the sensing groups divided based on the sensors are further divided, data in the sensing groups is deduplicated, then data between the sensing groups is deduplicated, and finally data between the compute groups is deduplicated. The foregoing deduplication process can ensure an obvious deduplication effect, improve deduplication precision, and enable the deduplication result more accurate, so that the trajectory planned based on the deduplication result can also be accurate, thereby improving driving safety of the smart car. In addition, a relationship between the obstacle and the nearby obstacle can be considered in the deduplication process, so that the process can be reduced. In addition, because the sensors are divided into the plurality of sensing groups, deduplication performed on the data in the groups and then performed on the data between the groups implements obstacle deduplication accuracy. In addition, the data in the plurality of sensing groups can be processed simultaneously, so that processing efficiency of deduplication on a plurality of obstacles can be improved. In addition, in the method in this application, the obstacle data collected by all the sensors in the car is considered, and the comprehensive sensing range can cover the panoramic range of the smart car. This can provide more comprehensive obstacle data, and is more conducive to automatic driving decision-making of the smart car.

It should be noted that, when the trajectory planning method in this application is applicable to the system shown in FIG. 2, the controller 101 performs step 401, step 403, and the group dividing operation in step 402, and the sensing compute unit separately performs a process of performing first deduplication processing on obstacle data collected by sensors in the compute group. Because principles are the same, details are not described herein again.

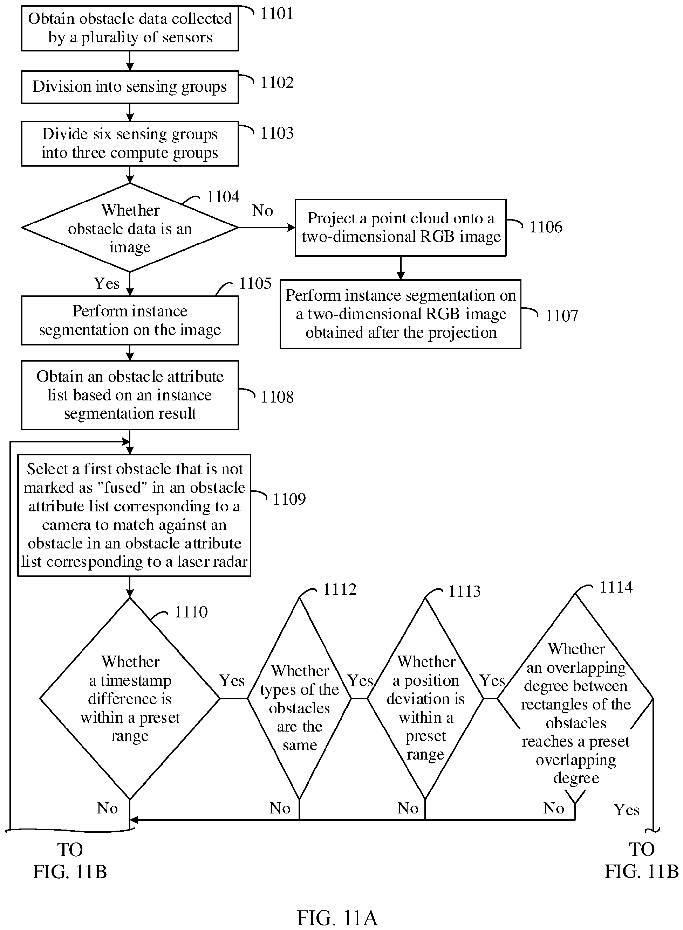

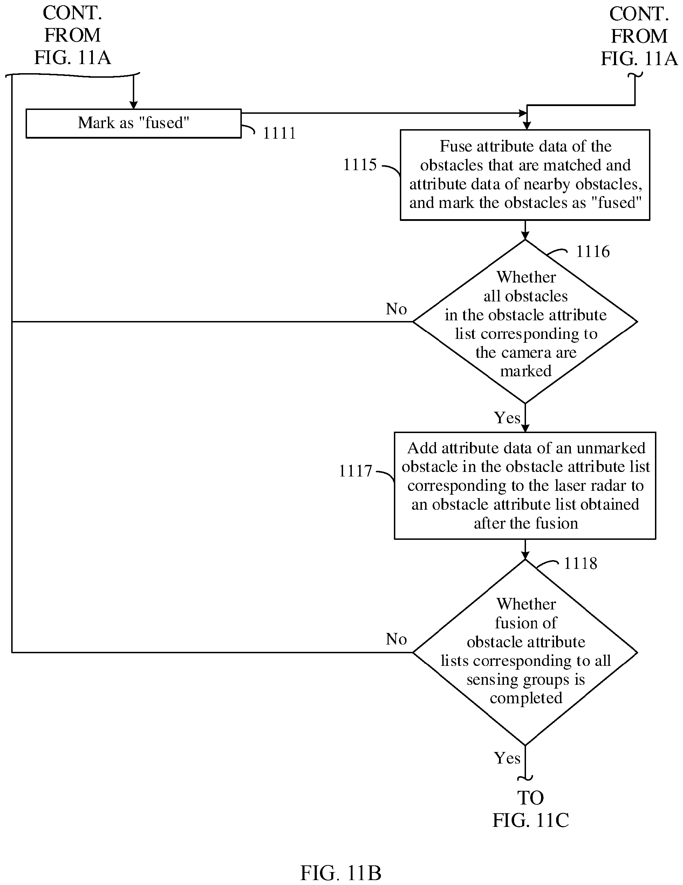

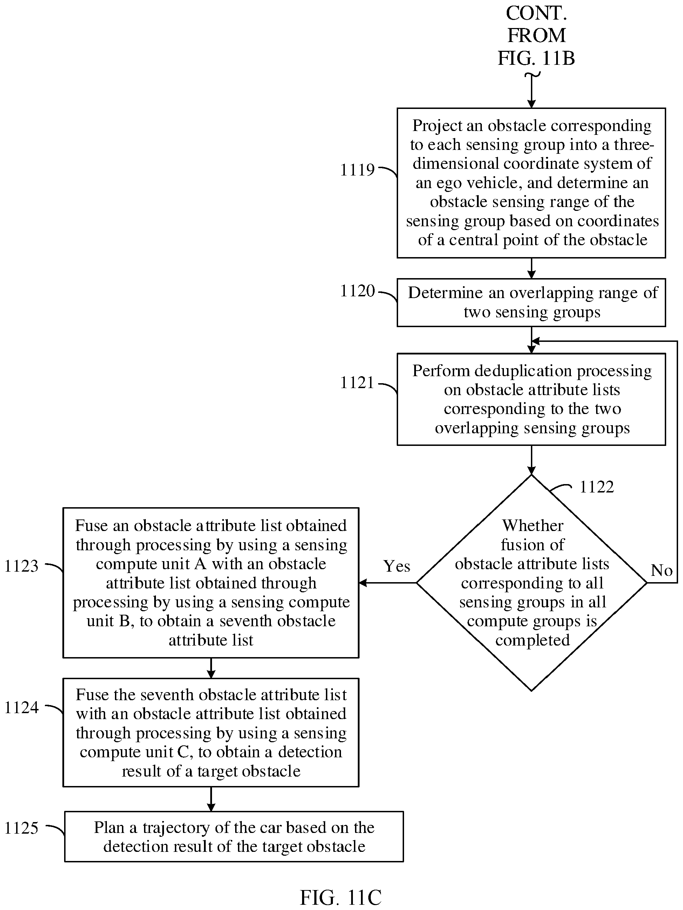

Based on the foregoing embodiment, the following describes, by using a specific example, an obstacle detection method provided in this application. The architecture in FIG. 3 is used as an example. It is assumed that types and distribution of a plurality of sensors in a smart car are shown in FIG. 3. Refer to FIG. 11A to FIG. 11C. A specific execution procedure of a controller may be specifically as follows:

Step 1101: The controller obtains obstacle data collected by the plurality of sensors.

Specifically, in this example, the obstacle data collected by the plurality of sensors that is obtained by the controller includes images collected by the camera 0 to the camera 5 and point clouds collected by the laser radars a to e.

Step 1102: The controller puts, based on sensing ranges of the plurality of sensors, one camera and one laser radar whose sensing ranges overlap into one sensing group, and finally obtains the following six sensing groups:

    sensing group (1): the camera 0 and the laser radar a;
    sensing group (2): the camera 3 and the laser radar b;
    sensing group (3): the camera 1 and the laser radar a;
    sensing group (4): the camera 4 and the laser radar d;
    sensing group (5): the camera 2 and the laser radar c; and
    sensing group (6): the camera 5 and the laser radar e.

Step 1103: The controller divides the six sensing groups into three compute groups based on sensing ranges of the six sensing groups, where the sensing group (1) and the sensing group (2) are put into one compute group, the sensing group (3) and the sensing group (5) are put into one compute group, and the sensing group (4) and the sensing group (6) are put into one compute group.

Then, the controller performs deduplication processing on data in the compute group including the sensing group (1) and the sensing group (2) by using the sensing compute unit A, performs deduplication processing on data in the compute group including the sensing group (3) and the sensing group (5) by using the sensing compute unit B, and performs deduplication processing on data in the compute group including the sensing group (4) and the sensing group (6) by using the sensing compute unit C. The foregoing three processes are performed simultaneously. The foregoing step continues to be described below by using an example in which the controller performs a calculation process by using the sensing compute unit A as an example. That the controller performs, by using the sensing compute unit A, the deduplication processing on a point cloud collected by the laser radar a and data collected by the camera 0 in the sensing group (1) is specifically performing the following steps.

Step 1104: The sensing compute unit A in the controller determines whether the obstacle data is an image; and if the obstacle data is the image, performs step 1105; or otherwise, performs step 1106.

Step 1105: The controller performs, by using the sensing compute unit A, instance segmentation on the image by using a mask R-CNN model, and then performs step 1108.

Step 1106: The controller projects the point cloud onto a two-dimensional RGB image by using the sensing compute unit A.

For a specific projection process, refer to the specific description of the point cloud projection in step 402. Details are not described herein again.

Step 1107: The controller performs, by using the sensing compute unit A, instance segmentation on a two-dimensional RGB image obtained after the projection.

Step 1108: The controller obtains, by using the sensing compute unit A, an obstacle attribute list corresponding to the laser radar or an obstacle attribute list corresponding to the camera based on an instance segmentation result.

Step 1109: The controller selects, by using the sensing compute unit A, a first obstacle that is not marked as "fused" in the obstacle attribute list corresponding to the camera to match against an obstacle in the obstacle attribute list corresponding to the laser radar.

Step 1110: The controller determines, by using the sensing compute unit A, whether a timestamp difference is within a preset range, for example, whether the timestamp difference is less than or equal to 0.4 milliseconds (ms); and if the timestamp difference is within the preset range, performs step 1112; or otherwise, performs step 1111.

Step 1111: The controller marks the obstacle as "fused" by using the sensing compute unit A, or marks that no obstacle is matched, or marks in another form; and then performs step 1115.

Step 1112: The controller determines, by using the sensing compute unit A, whether types of obstacles are the same; and if the types of the obstacles are the same, performs step 1113; or otherwise, performs step 1111.

Step 1113: The controller determines, by using the sensing compute unit A, whether a position deviation between the obstacles is within a preset range; and if the position deviation is within the preset range, performs step 1114; or otherwise, performs step 1111.

Step 1114: The controller calculates, by using the sensing compute unit A based on sizes (lengths and widths) of the obstacles, whether an overlapping degree between rectangles of the obstacles reaches a preset overlapping degree; and if the overlapping degree reaches the preset overlapping degree, performs step 1115; or otherwise, performs step 1111.

Step 1115: The controller fuses, by using the sensing compute unit A, attribute data of the obstacles that are matched and attribute data of nearby obstacles, and marks the obstacles as "fused".

For example, in FIG. 9, the obstacles a1 and b3 that are matched are fused, and the nearby obstacles a2 and b2 are fused.

Step 1116: The controller determines, by using the sensing compute unit A, whether all obstacles in the obstacle attribute list corresponding to the camera are marked; and if all the obstacles in the obstacle attribute list corresponding to the camera are marked, performs step 1117; or otherwise, performs step 1109.

Step 1117: The controller adds, by using the sensing compute unit A, attribute data of an unmarked obstacle in the obstacle attribute list corresponding to the laser radar to an obstacle attribute list obtained after the fusion.

The obstacle list obtained after the fusion herein is an obstacle attribute list corresponding to the sensing group (1).

Likewise, for a process in which the controller performs, by using the sensing compute unit A, deduplication processing on a point cloud collected by the laser radar b and data collected by the camera 3 in the sensing group (2), to obtain an obstacle attribute list corresponding to the sensing group (2), refer to the process in step 1104 to step 1117. Details are not described herein again.

Step 1118: The controller determines, by using the sensing compute unit A, whether fusion of obstacle attribute lists corresponding to all sensing groups (namely, the sensing group (1) and the sensing group (2) herein) is completed; and if the fusion is completed, performs step 1119; or otherwise, performs step 1109.

Step 1119: The controller projects, by using the sensing compute unit A, an obstacle corresponding to each sensing group into a three-dimensional coordinate system of the ego vehicle, and determines an obstacle sensing range of the sensing group based on coordinates of a central point of the obstacle.

For a specific projection process, refer to content in step 402. Details are not described herein again.

Step 1120: The controller determines an overlapping range of the two sensing groups by using the sensing compute unit A.

Step 1121: The controller performs, by using the sensing compute unit A, deduplication processing on the obstacle attribute lists corresponding to the two overlapping sensing groups.

Specifically, a principle in a process of performing deduplication and fusion on the obstacle attribute lists between the two sensing groups is the same as a principle in the foregoing process of performing fusion on the obstacle attribute lists corresponding to the two sensors. Refer to the foregoing process in step 1109 to step 1117. A difference lies in that the obstacle attribute list corresponding to the camera and the obstacle attribute list corresponding to the laser radar that are mentioned in the foregoing steps are the obstacle attribute lists corresponding to the two sensing groups, and an obtained result is the obstacle attribute list corresponding to a compute group including the two sensing groups. Details are not described herein again.

Likewise, a method in which the controller performs, by using the sensing compute unit B, deduplication processing on data in the compute group including the sensing group (3) and the sensing group (5), and a method in which the controller performs, by using the sensing compute unit C, deduplication processing on data in the compute group including the sensing group (4) and the sensing group (6) are the same as the method in which the controller performs, by using the sensing compute unit A, deduplication processing on the point cloud collected by the laser radar a and the data collected by the camera 0 in the sensing group (1), and reference may be made to each other. Details are not described herein again.

Step 1122: The controller determines whether fusion of obstacle attribute lists between all sensing groups in all compute groups is completed; and if the fusion is completed, performs step 1123; or otherwise, performs step 1121.

Step 1123: The controller fuses the obstacle attribute list obtained through processing by using the sensing compute unit A and an obstacle attribute list obtained through processing by using the sensing compute unit B, to obtain a seventh obstacle attribute list.

Step 1124: The controller fuses the seventh obstacle attribute list and an obstacle attribute list obtained through processing by using the sensing compute unit C, to obtain a detection result of a target obstacle.

Specifically, a principle in the fusion processes in step 1123 and step 1124 is the same as that in the process of performing deduplication on the obstacle attribute lists corresponding to the two sensors. For details, refer to the process in step 1109 to step 1117. Details are not described herein again.

In an optional implementation, the controller may first fuse the obstacle attribute list obtained through processing by using the sensing compute unit A and the obstacle attribute list obtained through processing by using the sensing compute unit C, and then fuse the obstacle attribute list obtained through processing by using the sensing compute unit B with an obstacle attribute list obtained after the fusion. Alternatively, the controller may first fuse the obstacle attribute list obtained through processing by using the sensing compute unit B and the obstacle attribute list obtained through processing by using the sensing compute unit C, and then fuse the obstacle attribute list obtained through processing by using the sensing compute unit A with an obstacle attribute list obtained after fusion. This is not limited in this application.

Step 1125: The controller plans a trajectory of the car based on the detection result of the target obstacle.

In the foregoing method, in a running process of the smart car, the controller in the smart car can perform deduplication on the obstacle data collected by the plurality of sensors, so as to obtain the effective detection result of the target obstacle, and further plan the trajectory of the smart car based on the detection result of the target obstacle. This can resolve a current problem that an obstacle cannot be effectively detected. This can further resolve a problem of an inaccurate planned trajectory caused when obstacles collected by the plurality of sensors overlap in a current scenario in which there are the plurality of sensors. In the foregoing deduplication process, a group division manner can be proposed with reference to an overlapping relationship between the sensing ranges of the sensors. After the sensing groups divided based on the sensors are further divided, data in the sensing groups is deduplicated, then data between the sensing groups is deduplicated, and finally data between the compute groups is deduplicated. The foregoing deduplication process can ensure an obvious deduplication effect, improve deduplication precision, and enable the deduplication result more accurate, so that the trajectory planned based on the deduplication result can also be accurate, thereby improving driving safety of the smart car. In addition, because the sensors are divided into the plurality of sensing groups, deduplication performed on the data in the groups and then performed on the data between the groups implements obstacle deduplication accuracy. In addition, the data in the plurality of sensing groups can be processed simultaneously, so that processing efficiency of deduplication on a plurality of obstacles can be improved. In addition, in the method in this application, the obstacle data collected by all the sensors in the car is considered, and the comprehensive sensing range can cover the panoramic range of the smart car. This can provide more comprehensive obstacle data, and is more conducive to automatic driving decision-making of the smart car.

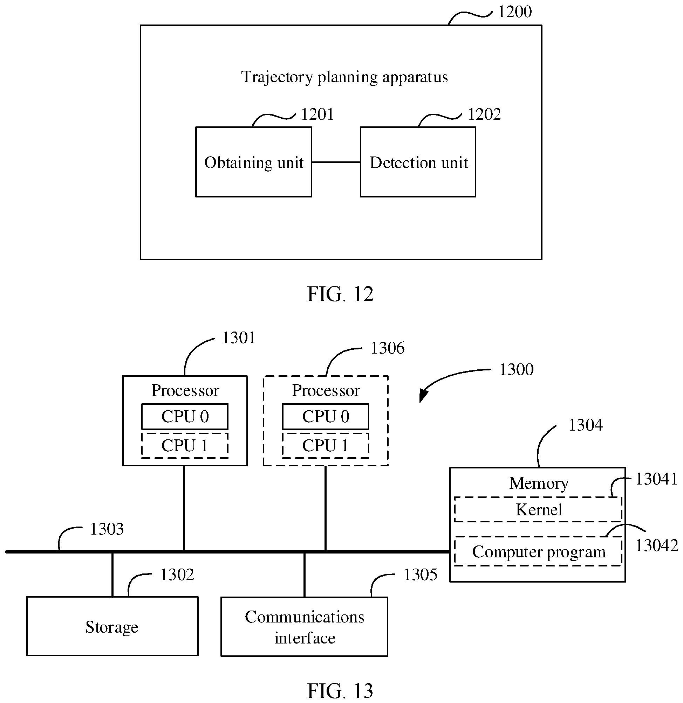

The foregoing describes in detail the trajectory planning method provided in this application with reference to FIG. 1 to FIG. 11C. The following describes a trajectory planning apparatus, a controller, and a smart car provided in this application with reference to FIG. 12 and FIG. 13.

FIG. 12 is a schematic diagram of a structure of a trajectory planning apparatus according to this application. As shown in the figure, the trajectory planning apparatus 1200 may include an obtaining unit 1201 and a detection unit 1202. Details are as follows.

The obtaining unit 1201 is configured to obtain obstacle data collected by a plurality of sensors. The plurality of sensors include at least two types of sensors. The detection unit 1202 is configured to: perform deduplication processing on the obstacle data collected by the plurality of sensors, to obtain a detection result of a target obstacle, and plan a trajectory of a car based on the detection result of the target obstacle.

Optionally, when performing the deduplication processing on the obstacle data collected by the plurality of sensors to obtain the detection result of the target obstacle, the detection unit 1202 is specifically configured to: divide the plurality of sensors into a plurality of sensing groups based on sensing ranges of the plurality of sensors, where any sensing group includes at least two sensors, types of the at least two sensors are at least two types, sensing ranges of sensors in any sensing group overlap, and a total range of the sensing ranges of the sensors in all the sensing groups covers a panoramic range of the smart car; divide the plurality of sensing groups into a plurality of compute groups based on a maximum range including sensing ranges of the plurality of sensing groups, where any compute group includes at least two sensing groups, and maximum ranges of the at least two sensing groups overlap; perform first deduplication processing on obstacle data collected by sensors in each compute group; and perform second deduplication processing on first deduplication results corresponding to the plurality of compute groups, to obtain a second deduplication result.

Optionally, when performing the first deduplication processing on obstacle data collected by sensors in any compute group, the detection unit 1202 is specifically configured to: perform the first deduplication processing on obstacle data collected by sensors in each sensing group in the any compute group; and perform the second deduplication processing on the first deduplication results corresponding to the at least two sensing groups in the any compute group, to obtain a second deduplication result corresponding to the any compute group, where the second deduplication result includes the detection result of the target obstacle.

Optionally, when performing the first deduplication processing on obstacle data collected by sensors in any sensing group, the detection unit 1202 is specifically configured to: generate, based on obstacle data collected by each sensor in the any sensing group, an obstacle attribute list corresponding to the sensor, where the obstacle attribute list corresponding to the sensor includes an attribute of at least one obstacle; and fuse obstacle attribute lists corresponding to all the sensors in the any sensing group, to obtain an obstacle attribute list corresponding to the any sensing group.

Optionally, when generating, based on obstacle data collected by each sensor, the obstacle attribute list corresponding to the sensor, the detection unit 1202 is specifically configured to: when the sensor is a laser radar, project point cloud data onto a two-dimensional RGB image based on preset virtual camera parameters, where obstacle data collected by the laser radar is the point cloud data; and perform instance segmentation on a two-dimensional RGB image obtained after the projection, to obtain an obstacle attribute list corresponding to the laser radar; or when the sensor is a camera, perform instance segmentation on a two-dimensional RGB image, to obtain an obstacle attribute list corresponding to the camera, where obstacle data collected by the camera is the two-dimensional RGB image.

Optionally, when performing instance segmentation on any two-dimensional RGB image to obtain an obstacle attribute list, the detection unit 1202 is specifically configured to: enter the two-dimensional RGB image into a preset instance segmentation model, to obtain an instance segmentation result; and generate the obstacle attribute list based on the instance segmentation result.

Optionally, when fusing obstacle attribute lists corresponding to all the sensors in the any sensing group, the detection unit 1202 is specifically configured to: perform matching against an obstacle in a second obstacle attribute list, starting from a first obstacle that is not marked as "fused" in a first obstacle attribute list, until all obstacles in the first obstacle attribute list are marked as "fused"; and when there is a matched obstacle in the second obstacle attribute list, combine attribute data of the obstacle in the first obstacle list and the second obstacle list, combine attribute data of an obstacle near the obstacle in the first obstacle list and the second obstacle list, and mark the obstacle and the obstacle near the obstacle as "fused"; or when there is no matched obstacle in the second obstacle attribute list, mark the obstacle as "fused", where the first obstacle attribute list is an obstacle attribute list obtained after A obstacle attribute lists in obstacle attribute lists corresponding to N sensors in the any sensing group are fused, the second obstacle attribute list is an obstacle attribute list obtained after B obstacle attribute lists are fused, N is an integer greater than or equal to 2, A is an integer greater than or equal to 1, B is an integer greater than or equal to 1, and A+B=N.

Optionally, when performing the second deduplication processing on first deduplication results corresponding to at least two sensing groups in the any compute group, to obtain a second deduplication result corresponding to the any compute group, the detection unit 1202 is specifically configured to: determine, based on a position of an obstacle in a first deduplication result corresponding to each sensing group, a sensing range corresponding to each sensing group; determine an overlapping range between the at least two sensing groups based on the sensing range corresponding to each sensing group; and perform the second deduplication processing on the first deduplication results corresponding to the at least two sensing groups with the overlapping range.

Optionally, when performing the second deduplication processing on the first deduplication results corresponding to the at least two sensing groups with the overlapping range, the detection unit 1202 is specifically configured to: perform matching against an obstacle in a fourth obstacle attribute list, starting from a first obstacle that is not marked as "fused" in a third obstacle attribute list, until all obstacles in the third obstacle attribute list are marked as "fused"; and when there is a matched obstacle in the fourth obstacle attribute list, combine attribute data of the obstacle in the third obstacle list and the fourth obstacle list, combine attribute data of an obstacle near the obstacle in the third obstacle list and the fourth obstacle list, and mark the obstacle and the obstacle near the obstacle as "fused"; or when there is no matched obstacle in the fourth obstacle attribute list, mark the obstacle as "fused", where the third obstacle attribute list is an obstacle attribute list obtained after deduplication results corresponding to C sensing groups in M sensing groups in any compute group are fused, the fourth obstacle attribute list is an obstacle attribute list obtained after deduplication results corresponding to D sensing groups are fused, M is an integer greater than or equal to 2, C is an integer greater than or equal to 1, D is an integer greater than or equal to 1, and C+D=M.

Optionally, when performing the second deduplication processing on first deduplication results corresponding to the plurality of compute groups, the detection unit 1202 is specifically configured to: perform matching against an obstacle in a sixth obstacle attribute list, starting from a first obstacle that is not marked as "fused" in a fifth obstacle attribute list, until all obstacles in the fifth obstacle attribute list are marked as "fused"; and when there is a matched obstacle in the sixth obstacle attribute list, combine attribute data of the obstacle in the fifth obstacle list and the sixth obstacle list, combine attribute data of an obstacle near the obstacle in the fifth obstacle list and the sixth obstacle list, and mark the obstacle and the obstacle near the obstacle as "fused"; or when there is no matched obstacle in the sixth obstacle attribute list, mark the obstacle as "fused", where the fifth obstacle attribute list is an obstacle attribute list obtained after E obstacle attribute lists in obstacle attribute lists corresponding to L compute groups are fused, the sixth obstacle attribute list is an obstacle attribute list obtained after F obstacle attribute lists are fused, L is a total quantity of compute groups, L is an integer greater than or equal to 2, E is an integer greater than or equal to 1, F is an integer greater than or equal to 1, and E+F=L.

Optionally, there is a matched obstacle if the following conditions are met: a timestamp difference of two obstacles is less than a preset range, the two obstacles are of a same obstacle type, a position deviation between the two obstacles is within a preset range, and frame areas of the two obstacles overlap.

It should be understood that the trajectory planning apparatus 1200 in this embodiment of this application may be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. Alternatively, when the trajectory planning method shown in FIG. 4 or FIG. 11A to FIG. 11C is implemented by using software, the trajectory planning apparatus 1200 and modules of the trajectory planning apparatus may also be software modules.

The trajectory planning apparatus 1200 in this embodiment of this application may correspondingly perform the method described in embodiments of this application. In addition, the foregoing and other operations and/or functions of the units in the trajectory planning apparatus 1200 are separately used to implement a corresponding procedure of each method in FIG. 4 or FIG. 11A to FIG. 11C. For brevity, details are not described herein again.

In a running process of a smart car, the foregoing trajectory planning apparatus 1200 can perform deduplication on the obstacle data collected by the plurality of sensors, so as to obtain the effective detection result of the target obstacle, and further plan the trajectory of the smart car based on the detection result of the target obstacle. This can resolve a current problem that an obstacle cannot be effectively detected. This can further resolve a problem of an inaccurate planned trajectory caused when obstacles collected by the plurality of sensors overlap in a current scenario in which there are the plurality of sensors. In the foregoing deduplication process, a group division manner can be proposed with reference to an overlapping relationship between the sensing ranges of the sensors. After the sensing groups divided based on the sensors are further divided, data in the sensing groups is deduplicated, then data between the sensing groups is deduplicated, and finally data between the compute groups is deduplicated. The foregoing deduplication process can ensure an obvious deduplication effect, improve deduplication precision, and enable the deduplication result more accurate, so that the trajectory planned based on the deduplication result can also be accurate, thereby improving driving safety of the smart car. In addition, a relationship between the obstacle and the nearby obstacle can be considered in the deduplication process, so that the process can be reduced. In addition, because the sensors are divided into the plurality of sensing groups, deduplication performed on the data in the groups and then performed on the data between the groups implements obstacle deduplication accuracy. In addition, the data in the plurality of sensing groups can be processed simultaneously, so that processing efficiency of deduplication on a plurality of obstacles can be improved. In addition, in the method in this application, the obstacle data collected by all the sensors in the car is considered, and the comprehensive sensing range can cover the panoramic range of the smart car. This can provide more comprehensive obstacle data, and is more conducive to automatic driving decision-making of the smart car.

FIG. 13 is a schematic diagram of a structure of a controller according to an embodiment of this application. The controller is applied to the system shown in FIG. 2 or FIG. 3, and is configured to implement the trajectory planning method shown in FIG. 4 or FIG. 11A to FIG. 11C. Refer to FIG. 13. The controller 1300 may include a processor 1301, a storage 1302, and a bus 1303. The processor 1301 and the storage 1302 communicate with each other through the bus 1303, or may communicate in another manner such as wireless transmission. The storage 1302 is configured to store instructions, and the processor 1301 is configured to execute the instructions stored in the storage 1302. The storage 1302 stores program code, and the processor 1301 may invoke the program code stored in the storage 1302 to perform the following operations: obtaining obstacle data collected by a plurality of sensors, where the plurality of sensors include at least two types of sensors; performing deduplication processing on the obstacle data collected by the plurality of sensors, to obtain a detection result of a target obstacle; and planning a trajectory of a car based on the detection result of the target obstacle.

Optionally, the controller 1300 shown in FIG. 13 further includes a memory 1304 and a communications interface 1305. The memory 1304 may be physically integrated with the processor 1301, or may exist in the processor 1301, or exist in a form of an independent unit. A computer program 13042 may be stored in the memory 1304 or the storage 1302. Optionally, the computer program code 13042 (for example, a to-be-debugged program) stored in the storage 1302 is copied to the memory 1304, and is executed by the processor 1301. A kernel 13041 may further run in the memory 1304.

It should be understood that, in this embodiment of this application, the processor 1301 may be a central processing unit (central processing unit, CPU); the processor 1301 may be another general purpose processor, a digital signal processor (digital signal processing, DSP), an application-specific integrated circuit (application-specific integrated circuit, ASIC), a field programmable logic device (programmable logic device, PLD), where the PLD may be a complex programmable logic device (complex programmable logic device, CPLD), a field-programmable gate array (field-programmable gate array, FPGA), generic array logic (generic array logic, GAL) or any combination thereof; and the processor 1301 may be another programmable logic device, a discrete gate or a transistor logic device, a discrete hardware component, or the like. The general purpose processor may be a microprocessor, any conventional processor, or the like.

Optionally, the controller shown in FIG. 13 may further include a processor 1306. The processor 1301 and the processor 1306 may be processors of a same type or different types. A quantity of processor cores in each type of processor does not constitute a limitation on this application.

The storage 1302 may include a read-only memory and a random access memory, and provide instructions, programs, and data to the processor 1301. For example, the program may include program code, and the program code includes computer operation instructions. The storage 1302 may further include a non-volatile random access memory. For example, the storage 1302 may further store information about a device type.

The storage 1302 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 1303 may further include an address bus, a power bus, a control bus, a status signal bus, and the like. The bus 1303 may be a peripheral component interconnect (peripheral component interconnect, PCI) bus, an extended industry standard architecture (extended industry standard architecture, EISA) bus, or the like; may be a controller area network (controller area network, CAN); or may a vehicle-mounted Ethernet (Ethernet), or another internal bus that implements connections of components/devices shown in FIG. 13. However, for clear description, various buses are marked as the bus 1303 in FIG. 13. For ease of representation, only one thick line is used to represent the bus in FIG. 13, but this does not mean that there is only one bus or only one type of bus.

It should be understood that the controller 1300 in this embodiment of this application may correspond to the trajectory planning apparatus 1200 in embodiments of this application, and may correspond to the controller that is used as a main body to perform operation steps in the method shown in FIG. 4 or FIG. 11A to FIG. 11C. In addition, the foregoing and other operations and/or functions of the modules in the controller 1300 are separately used to implement corresponding procedures of each method in FIG. 4 or FIG. 11A to FIG. 11C. For brevity, details are not described herein again.

In a running process of a smart car, the foregoing controller 1300 can perform deduplication on the obstacle data collected by the plurality of sensors, so as to obtain the effective detection result of the target obstacle, and further plan the trajectory of the smart car based on the detection result of the target obstacle. This can resolve a current problem that an obstacle cannot be effectively detected. This can further resolve a problem of an inaccurate planned trajectory caused when obstacles collected by the plurality of sensors overlap in a current scenario in which there are the plurality of sensors. In the foregoing deduplication process, a group division manner can be proposed with reference to an overlapping relationship between the sensing ranges of the sensors. After the sensing groups divided based on the sensors are further divided, data in the sensing groups is deduplicated, then data between the sensing groups is deduplicated, and finally data between the compute groups is deduplicated. The foregoing deduplication process can ensure an obvious deduplication effect, improve deduplication precision, and enable the deduplication result more accurate, so that the trajectory planned based on the deduplication result can also be accurate, thereby improving driving safety of the smart car. In addition, a relationship between the obstacle and the nearby obstacle can be considered in the deduplication process, so that the process can be reduced. In addition, because the sensors are divided into the plurality of sensing groups, deduplication performed on the data in the groups and then performed on the data between the groups implements obstacle deduplication accuracy. In addition, the data in the plurality of sensing groups can be processed simultaneously, so that processing efficiency of deduplication on a plurality of obstacles can be improved. In addition, in the method in this application, the obstacle data collected by all the sensors in the car is considered, and the comprehensive sensing range can cover the panoramic range of the smart car. This can provide more comprehensive obstacle data, and is more conducive to automatic driving decision-making of the smart car.

This application further provides a smart car. The smart car may include the foregoing controller or trajectory planning apparatus.

This application further provides a vehicle-mounted system. The vehicle-mounted system includes a plurality of sensors and a controller, or includes a plurality of sensors, a controller, and a plurality of sensing compute units.

This application further provides a trajectory planning system. The trajectory planning system includes at least one smart car. The foregoing components or devices are separately configured to perform operation steps of corresponding execution bodies in the method shown in FIG. 4 or FIG. 11A to FIG. 11C. For brevity, details are not described herein again.

All or some of the foregoing embodiments may be implemented by using software, hardware, firmware, or any combination thereof. When the software is used to implement embodiments, all or some of the foregoing embodiments may be implemented in a form of a computer program product. The computer program product includes one or more computer instructions. When the computer program instructions are loaded or executed on the computer, all or some of the procedures or functions according to embodiments of this application are generated. The computer may be a general purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art may clearly understand that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separated, and parts displayed as units may or may not be physical units, that is, may be located in one position, or may be distributed on a plurality of network units. Some or all of the units may be selected according to actual requirements to achieve the objectives of the technical solutions of this application.

The foregoing description is merely specific implementations of this application. Any variation or replacement readily figured out by a person skilled in the art based on the specific implementations provided in this application shall fall within the protection scope of this application.

**Claims**

1. A trajectory planning method, wherein the method comprises:

   obtaining obstacle data collected by a plurality of sensors, wherein the plurality of sensors comprise at least two types of sensors;
   performing deduplication processing on the obstacle data collected by the plurality of sensors, to obtain a detection result of a target obstacle; and
   planning a trajectory of a car based on the detection result of the target obstacle.

2. The method according to claim 1, wherein the performing deduplication processing on the obstacle data collected by the plurality of sensors, to obtain a detection result of a target obstacle comprises:

   dividing the plurality of sensors into a plurality of sensing groups based on sensing ranges of the plurality of sensors, wherein any sensing group comprises at least two sensors, types of the at least two sensors are at least two types, sensing ranges of sensors in any sensing group overlap, and a total range of the sensing ranges of the sensors in all the sensing groups covers a panoramic range of the smart car;
   dividing the plurality of sensing groups into a plurality of compute groups based on a maximum range comprising sensing ranges of the plurality of sensing groups, wherein any compute group comprises at least two sensing groups, and maximum ranges of the at least two sensing groups overlap;
   performing first deduplication processing on obstacle data collected by sensors in each compute group; and
   performing second deduplication processing on first deduplication results corresponding to the plurality of compute groups, to obtain a second deduplication result.

3. The method according to claim 1 or 2, wherein performing first deduplication processing on obstacle data collected by sensors in any compute group comprises:

performing the first deduplication processing on obstacle data collected by sensors in each sensing group in the any compute group; and
performing the second deduplication processing on first deduplication results corresponding to the at least two sensing groups in the any compute group, to obtain a second deduplication result corresponding to the any compute group, wherein the second deduplication result comprises the detection result of the target obstacle.

4. The method according to any one of claims 1 to 3, wherein performing first deduplication processing on obstacle data collected by sensors in any sensing group comprises:

generating, based on obstacle data collected by each sensor in the any sensing group, an obstacle attribute list corresponding to the sensor, wherein the obstacle attribute list corresponding to the sensor comprises at least one obstacle attribute; and
fusing obstacle attribute lists corresponding to all the sensors in the any sensing group, to obtain an obstacle attribute list corresponding to the any sensing group.

5. The method according to any one of claims 1 to 4, wherein the generating, based on obstacle data collected by each sensor, an obstacle attribute list corresponding to the sensor comprises:

when the sensor is a laser radar, projecting point cloud data onto a two-dimensional RGB image based on preset virtual camera parameters, wherein obstacle data collected by the laser radar is the point cloud data; and performing instance segmentation on a two-dimensional RGB image obtained after the projection, to obtain an obstacle attribute list corresponding to the laser radar; or
when the sensor is a camera, performing instance segmentation on a two-dimensional RGB image, to obtain an obstacle attribute list corresponding to the camera, wherein obstacle data collected by the camera is the two-dimensional RGB image.

6. The method according to any one of claims 1 to 5, wherein performing instance segmentation on any two-dimensional RGB image to obtain an obstacle attribute list comprises:

entering the two-dimensional RGB image into a preset instance segmentation model, to obtain an instance segmentation result; and
generating the obstacle attribute list based on the instance segmentation result.

7. The method according to any one of claims 1 to 6, wherein the fusing obstacle attribute lists corresponding to all the sensors in the any sensing group comprises:

performing matching against an obstacle in a second obstacle attribute list, starting from a first obstacle that is not marked as "fused" in a first obstacle attribute list, until all obstacles in the first obstacle attribute list are marked as "fused"; and
when there is a matched obstacle in the second obstacle attribute list, combining attribute data of the obstacle in the first obstacle list and the second obstacle list, combining attribute data of an obstacle near the obstacle in the first obstacle list and the second obstacle list, and marking the obstacle and the obstacle near the obstacle as "fused"; or
when there is no matched obstacle in the second obstacle attribute list, marking the obstacle as "fused", wherein the first obstacle attribute list is an obstacle attribute list obtained after A obstacle attribute lists in obstacle attribute lists corresponding to N sensors in the any sensing group are fused, the second obstacle attribute list is an obstacle attribute list obtained after B obstacle attribute lists are fused, N is an integer greater than or equal to 2, A is an integer greater than or equal to 1, B is an integer greater than or equal to 1, and A+B=N.

8. The method according to any one of claims 1 to 7, wherein the performing the second deduplication processing on first deduplication results corresponding to the at least two sensing groups in the any compute group, to obtain a second deduplication result corresponding to the any compute group comprises:

determining, based on a position of an obstacle in a first deduplication result corresponding to each sensing group, a sensing range corresponding to the sensing group;

determining an overlapping range between the at least two sensing groups based on the sensing range corresponding to each sensing group; and

performing the second deduplication processing on the first deduplication results corresponding to the at least two sensing groups with the overlapping range.

9. The method according to any one of claims 1 to 8, wherein the performing the second deduplication processing on the first deduplication results corresponding to the at least two sensing groups with the overlapping range comprises:

performing matching against an obstacle in a fourth obstacle attribute list, starting from a first obstacle that is not marked as "fused" in a third obstacle attribute list, until all obstacles in the third obstacle attribute list are marked as "fused"; and

when there is a matched obstacle in the fourth obstacle attribute list, combining attribute data of the obstacle in the third obstacle list and the fourth obstacle list, combining attribute data of an obstacle near the obstacle in the third obstacle list and the fourth obstacle list, and marking the obstacle and the obstacle near the obstacle as "fused"; or

when there is no matched obstacle in the fourth obstacle attribute list, marking the obstacle as "fused", wherein the third obstacle attribute list is an obstacle attribute list obtained after deduplication results corresponding to C sensing groups in M sensing groups in any compute group are fused, the fourth obstacle attribute list is an obstacle attribute list obtained after deduplication results corresponding to D sensing groups are fused, M is an integer greater than or equal to 2, C is an integer greater than or equal to 1, D is an integer greater than or equal to 1, and C+D=M.

10. The method according to any one of claims 1 to 9, wherein the performing second deduplication processing on first deduplication results corresponding to the plurality of compute groups comprises:

performing matching against an obstacle in a sixth obstacle attribute list, starting from a first obstacle that is not marked as "fused" in a fifth obstacle attribute list, until all obstacles in the fifth obstacle attribute list are marked as "fused"; and

when there is a matched obstacle in the sixth obstacle attribute list, combining attribute data of the obstacle in the fifth obstacle list and the sixth obstacle list, combining attribute data of an obstacle near the obstacle in the fifth obstacle list and the sixth obstacle list, and marking the obstacle and the obstacle near the obstacle as "fused"; or

when there is no matched obstacle in the sixth obstacle attribute list, marking the obstacle as "fused", wherein the fifth obstacle attribute list is an obstacle attribute list obtained after E obstacle attribute lists in obstacle attribute lists corresponding to L compute groups are fused, the sixth obstacle attribute list is an obstacle attribute list obtained after F obstacle attribute lists are fused, L is a total quantity of compute groups, L is an integer greater than or equal to 2, E is an integer greater than or equal to 1, F is an integer greater than or equal to 1, and E+F=L.

11. The method according to any one of claims 1 to 10, wherein there is a matched obstacle if the following conditions are met:
a timestamp difference of two obstacles is less than a preset range, the two obstacles are of a same obstacle type, a position deviation between the two obstacles is within a preset range, and frame areas of the two obstacles overlap.

12. A trajectory planning apparatus, comprising an obtaining unit and a detection unit, wherein

the obtaining unit is configured to obtain obstacle data collected by a plurality of sensors, wherein the plurality of sensors comprise at least two types of sensors; and

the detection unit is configured to: perform deduplication processing on the obstacle data collected by the plurality of sensors, to obtain a detection result of a target obstacle, and plan a trajectory of a car based on the detection result of the target obstacle.

13. A controller, comprising a processor and a memory, wherein the memory stores computer program instructions, and when the controller runs, the processor executes the computer program instructions stored in the memory, to implement operation steps in the method according to any one of claims 1 to 11.

14. A smart car, wherein the smart car comprises a controller, and the controller is configured to perform a function of the controller according to claim 13.

b 0 1 c

3 2

a

Camera

Laser radar

4 5

d e

Car rear

FIG. 1

Car front

Sensing compute unit A

Sensing compute unit B

Controller 101

Sensing compute unit C

Car rear

Camera

Laser radar

FIG. 2

Car front

Camera

Laser radar

FIG. 3

| A controller obtains obstacle data collected by a plurality of sensors | ~ 401 |

| The controller performs deduplication processing on the obstacle data collected by the plurality of sensors, to obtain a detection result of a target obstacle | ~ 402 |

| The controller plans a trajectory of a car based on the detection result of the target obstacle | ~ 403 |

FIG. 4

FIG. 5

Box regression
(box regression)

Classification
(classification)

Mask
branch
(branch)

Head
(head)

Full-size feature map
(full-size feature map)

Fixed-size feature map
(fixed-size feature map)

RoIAlign layer
(RoIAlign layer)

RPN

Feature map
(feature map)

Convolutional backbone
(convolutional backbone)

CNN

FIG. 6

(a)　　　　　　　(b)　　　　　　　(c)

Rotation

Class box

Convolution

Convolution

FIG. 7

b

| p2 | a1 | Attribute (ID: 1, timestamp: a_t1, type: person, position: Xa1, size...) | | a2 | a3 | |
| p1 | a2 | Attribute (ID: 2, timestamp: a_t2, type: person, position: Xa2, size...) | | a1 | a3 | |
| Car 1 (car 1) | a3 | Attribute (ID: 3, timestamp: a_t3, type: car, position: Xa3, size...) | | a2 | a1 | |
| Car 2 (car 2) | a4 | Attribute (ID: 4, timestamp: a_t4, type: car, position: Xa4, size...) | | | | |

3

| Car 1 (car 1) | b1 | Attribute (ID: 1, timestamp: b_t1, type: car, position: Xb1, size...) | | b2 | b3 | |
| p1 | b2 | Attribute (ID: 2, timestamp: b_t2, type: person, position: Xb2, size...) | | b1 | b3 | |
| p2 | b3 | Attribute (ID: 3, timestamp: b_t3, type: person, position: Xb3, size...) | | b2 | b1 | |

~
TO
FIG. 8B

FIG. 8A

EP 4 083 738 A1

CONT.
FROM
FIG. 8A

Car 2
(car 2)

Car 2
(car 2)

p1

R

p2

Car front

b    c

0   1

3    a    2

A    B

Controller 101

C

4    5

d    e

Car rear

FIG. 8B

EP 4 083 738 A1

b

| | | | | |
|---|---|---|---|---|
| p2 | a1 | Attribute (ID: 1, timestamp: a_t1, type: person, position: Xa1, size...) | | |
| p1 | a2 | Attribute (ID: 2, timestamp: a_t2, type: person, position: Xa2, size...) | | |
| Car 1 (car 1) | a3 | Attribute (ID: 3, timestamp: a_t3, type: car, position: Xa3, size...) | | |
| Car 2 (car 2) | a4 | Attribute (ID: 4, timestamp: a_t4, type: car, position: Xa4, size...) | | |

a2 → a3 → ∨
a1 → a3 → ∨
a2 → a1 → ∨

3

| | | | | |
|---|---|---|---|---|
| Car 1 (car 1) | b1 | Attribute (ID: 1, timestamp: b_t1, type: car, position: Xb1, size...) | | |
| p1 | b2 | Attribute (ID: 2, timestamp: b_t2, type: person, position: Xb2, size...) | | |
| p2 | b3 | Attribute (ID: 3, timestamp: b_t3, type: person, position: Xb3, size...) | | |

b2 → b3 → ∨
b1 → b3 → ∨
b2 → b1 → ∨

a1 → a2 | Da1 → a3 | Da2 → ∨

b3 → b2 | Db1 → b1 | Db2 → ∨

FIG. 9

FIG. 10

Obtain obstacle data collected
by a plurality of sensors — 1101

Division into sensing groups — 1102

Divide six sensing groups
into three compute groups — 1103

Whether
obstacle data is an
image — 1104

No → Project a point cloud onto a
two-dimensional RGB image — 1106

Perform instance segmentation on
a two-dimensional RGB image
obtained after the projection — 1107

Yes ↓ — 1105

Perform instance
segmentation on the image

Obtain an obstacle attribute
list based on an instance
segmentation result — 1108

Select a first obstacle that is not
marked as "fused" in an obstacle
attribute list corresponding to a
camera to match against an
obstacle in an obstacle attribute
list corresponding to a laser radar — 1109

Whether
a timestamp
difference is
within a preset
range — 1110

Yes → Whether
types of the
obstacles
are the
same — 1112

Yes → Whether
a position
deviation is
within a
preset
range — 1113

Yes → Whether
an overlapping
degree between
rectangles of the
obstacles
reaches a preset
overlapping
degree — 1114

No          No          No          No      Yes

TO
FIG. 11B

TO
FIG. 11B

FIG. 11A

CONT.
FROM
FIG. 11A

CONT.
FROM
FIG. 11A

Mark as "fused" ⌐ 1111

1115 ⌐ Fuse attribute data of the obstacles that are matched and attribute data of nearby obstacles, and mark the obstacles as "fused"

⌐ 1116

No — Whether all obstacles in the obstacle attribute list corresponding to the camera are marked

Yes

1117 ⌐ Add attribute data of an unmarked obstacle in the obstacle attribute list corresponding to the laser radar to an obstacle attribute list obtained after the fusion

⌐ 1118

No — Whether fusion of obstacle attribute lists corresponding to all sensing groups is completed

Yes

TO
FIG. 11C

FIG. 11B

CONT.
FROM
FIG. 11B

1119 — Project an obstacle corresponding to each sensing group into a three-dimensional coordinate system of an ego vehicle, and determine an obstacle sensing range of the sensing group based on coordinates of a central point of the obstacle

1120 — Determine an overlapping range of two sensing groups

1121 — Perform deduplication processing on obstacle attribute lists corresponding to the two overlapping sensing groups

1122 Whether fusion of obstacle attribute lists corresponding to all sensing groups in all compute groups is completed

No

Yes

1123 — Fuse an obstacle attribute list obtained through processing by using a sensing compute unit A with an obstacle attribute list obtained through processing by using a sensing compute unit B, to obtain a seventh obstacle attribute list

1124 — Fuse the seventh obstacle attribute list with an obstacle attribute list obtained through processing by using a sensing compute unit C, to obtain a detection result of a target obstacle

1125 — Plan a trajectory of the car based on the detection result of the target obstacle

FIG. 11C

1200

Trajectory planning apparatus

1201

Obtaining unit

1202

Detection unit

FIG. 12

1301

Processor

CPU 0

CPU 1

1306

Processor

CPU 0

CPU 1

1300

1304

Memory

13041

Kernel

Computer program

13042

1303

1302

Storage

1305

Communications interface

FIG. 13

## INTERNATIONAL SEARCH REPORT

| International application No. |
| --- |
| **PCT/CN2020/132291** |

**A. CLASSIFICATION OF SUBJECT MATTER**

G05D 1/02(2020.01)i

According to International Patent Classification (IPC) or to both national classification and IPC

**B. FIELDS SEARCHED**

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

WPI, EPODOC, CNPAT, CNKI: 规划, 路径, 轨迹, 定位, 导航, 传感器, 雷达, 激光, 去重, 重复, 重叠, 障碍物, 覆盖, 智能车, 自动驾驶, 全景; path, track, planning, position, location, sensor, radar, laser, deduplication, vehicle, autopilot, panoramic, view, obstacle

**C. DOCUMENTS CONSIDERED TO BE RELEVANT**

| Category* | Citation of document, with indication, where appropriate, of the relevant passages | Relevant to claim No. |
| --- | --- | --- |
| X | CN 109739236 A (TENCENT TECHNOLOGY SHENZHEN CO., LTD.) 10 May 2019 (2019-05-10) description, paragraphs [0002], [0087]-[0110], figures 8-10 | 1-14 |
| A | CN 105425803 A (NINEBOT (BEIJING) TECHNOLOGY CO., LTD.) 23 March 2016 (2016-03-23) entire document | 1-14 |
| A | CN 110606071 A (CHINA FAW GROUP CORPORATION) 24 December 2019 (2019-12-24) entire document | 1-14 |
| A | CN 110132290 A (BEIJING BAIDU NETCOM SCIENCE AND TECHNOLOGY CO., LTD.) 16 August 2019 (2019-08-16) entire document | 1-14 |
| A | CN 107662607 A (SHARP CORPORATION) 06 February 2018 (2018-02-06) entire document | 1-14 |
| A | US 2018285234 A1 (COMMVAULT SYSTEMS, INC.) 04 October 2018 (2018-10-04) entire document | 1-14 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 January 2021** | **26 February 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/132291**

| Patent document cited in search report | | | Publication date (day/month/year) | Patent family member(s) | | | Publication date (day/month/year) |
|---|---|---|---|---|---|---|---|
| CN | 109739236 | A | 10 May 2019 | None | | | |
| CN | 105425803 | A | 23 March 2016 | CN | 105425803 | B | 19 May 2020 |
| CN | 110132290 | A | 16 August 2019 | None | | | |
| CN | 107662607 | A | 06 February 2018 | JP | 2018018242 | A | 01 February 2018 |
| | | | | US | 2018032081 | A1 | 01 February 2018 |
| | | | | CN | 107662607 | B | 06 March 2020 |
| | | | | US | 10324471 | B2 | 18 June 2019 |
| | | | | JP | 6717697 | B2 | 01 July 2020 |
| US | 2018285234 | A1 | 04 October 2018 | US | 10552294 | B2 | 04 February 2020 |
| | | | | US | 2020210313 | A1 | 02 July 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911417562